# EUROPEAN PATENT APPLICATION

(11) **EP 4 759 658 A1**
(43) Date of publication of application: **17.06.2026**
(21) Application number: 25222269.0
(22) Date of filing: 10.12.2025
(51) Int. Cl.: B60W 50/00, B60W 30/182

(54) **VEHICLE AND VEHICLE CONTROL INTERFACE BOX**

(30) Priority: 11.12.2024 JP 2024216181
(71) Applicant: Toyota Jidosha Kabushiki Kaisha, Toyota-shi, Aichi-ken 471-8571 (JP)
(72) Inventor: SUZUKI, Ikuma, Toyota-shi, 471-8571 (JP); KAGAWA, Tomoyuki, Toyota-shi, 471-8571 (JP)
(74) Representative: Simmons & Simmons LLP (Munich)

(57) **Abstract**

A vehicle (100) on which an autonomous driving kit (ADK) (200) is mountable comprises a control system (120) configured to control a plurality of functions of the vehicle (100) and a vehicle control interface box (VCIB) (110) configured to mediate communication of a signal between the ADK (200) and the control system (120). The ADK (200) is configured to operate in one control mode selected from a plurality of types of control modes. The VCIB (110) is configured to receive from the ADK (200) and store function setting information for each of the plurality of types of control modes. The function setting information is information indicating whether each of the plurality of functions is enabled or disabled. The VCIB (110) is configured to request the control system (120) to enable or disable each of the plurality of functions based on the function setting information corresponding to the selected one control mode.

## Description

### CROSS REFERENCE TO RELATED APPLICATIONS

This nonprovisional application is based on Japanese Patent Application No. 2024-216181 filed on December 11, 2024 with the Japan Patent Office, the entire contents of which are hereby incorporated by reference.

### BACKGROUND

### Field

The present disclosure relates to a vehicle on which an autonomous driving kit is mountable, and a vehicle control interface box.

### Description of the Background Art

Japanese Patent Laying-Open No. 2023-070099 discloses a technique to obtain an autonomous driving level currently executed by an autonomous driving system and an autonomous driving level scheduled to be executed, and terminate a reclining state of the seat back of the driver's seat when the current autonomous driving level declines.

### SUMMARY

According to the technique described in Japanese Patent Application Laying-Open No. 2023-070099, a vehicle's reclining control unit is required to constantly inquire of the autonomous driving system to confirm an autonomous driving level. Basically, the reclining control unit and the autonomous driving system communicate a signal to control reclining. The autonomous driving system is required to also transmit to the reclining control unit the signal to control reclining while autonomous driving control is applied. Such control increases a burden imposed on the autonomous driving system. Furthermore, for an autonomous driving system operating in one control mode selected from a plurality of types of control modes, a single reclining control is not necessarily suitable for all of the control modes. A vehicle disclosed in Japanese Patent Laying-Open No. 2023-070099 controls reclining mainly by a unit other than the autonomous driving system (i.e., the reclining control unit). Therefore, it is difficult for a developer or vendor of the autonomous driving system to customize the reclining control for each control mode of the autonomous driving system.

The present disclosure has been made to solve the above-described problem, and an object thereof is to perform appropriate vehicle control for each of a plurality of types of control modes while reducing a burden imposed on an autonomous driving kit (an autonomous driving system).

According to a first aspect of the present disclosure, there is provided a vehicle as described below. The vehicle is configured such that an autonomous driving kit is mountable thereon. The vehicle comprises a control system configured to control a plurality of functions of the vehicle and a vehicle control interface box configured to mediate communication of a signal between the autonomous driving kit and the control system. The autonomous driving kit is configured to operate in one control mode selected from a plurality of types of control modes. The vehicle control interface box is configured to receive from the autonomous driving kit and store function setting information for each of the plurality of types of control modes. The function setting information is information indicating whether each of the plurality of functions is enabled or disabled. The vehicle control interface box is configured to request the control system to enable or disable each of the plurality of functions based on the function setting information corresponding to the selected one control mode.

According to a second aspect of the present disclosure, there is provided a vehicle control interface box as described below. The vehicle control interface box is configured to be mountable to a vehicle. The vehicle control interface box is configured to mediate communication of a signal between an autonomous driving kit attached to the vehicle and a control system incorporated in the vehicle. The autonomous driving kit is configured to be operable in one control mode selected from a plurality of types of control modes. The vehicle control interface box is configured to receive from the autonomous driving kit and store function setting information for each of the plurality of types of control modes. The function setting information is information indicating whether each of a plurality of functions of the vehicle is enabled or disabled. The vehicle control interface box is configured to request the control system to enable or disable each of the plurality of functions based on the function setting information corresponding to the selected one control mode.

The foregoing and other objects, features, aspects, and advantages of the present disclosure will become apparent from the following detailed description of the present disclosure when taken in conjunction with the accompanying drawings.

### BRIEF DESCRIPTION OF THE DRAWINGS

Fig. 1 shows a schematic configuration of a vehicle according to an embodiment of the present disclosure.
Fig. 2 specifically illustrates a system of the vehicle shown in Fig. 1.
Fig. 3 is a diagram for illustrating a vehicle management system according to the present embodiment.
Fig. 4 outlines vehicle management according to the present embodiment.
Fig. 5 shows an example of a function setting table used in a personal mode.
Fig. 6 shows an example of a function setting table used in a taxi mode.
Fig. 7 shows an example of a function setting table used in a delivery mode.
Fig. 8 is a flowchart of a control mode setting process according to the present embodiment.
Fig. 9 shows a mode setting screen according to the present embodiment.
Fig. 10 is a flowchart of a process for a manual driving mode according to the present embodiment.
Fig. 11 shows an example of a manual driving screen depending on the use.
Fig. 12 is a flowchart of a function setting process according to the present embodiment.
Fig. 13 is a flowchart of a function setting information management process according to the present embodiment.
Fig. 14 is a flowchart of a control mode transition process according to the present embodiment.
Fig. 15 is a flowchart of a process for driving control according to the present embodiment.
Fig. 16 is a flowchart for details of autonomous driving control shown in Fig. 15.

Fig. 17 is a flowchart of an example of a process performed when function setting information is rewritten in the autonomous driving kit shown in Fig. 2.

### DESCRIPTION OF THE PREFERRED EMBODIMENTS

Hereinafter, an embodiment of the present disclosure will be described more specifically with reference to the drawings. In the figures, identical or equivalent components are identically denoted and will not be described repeatedly.

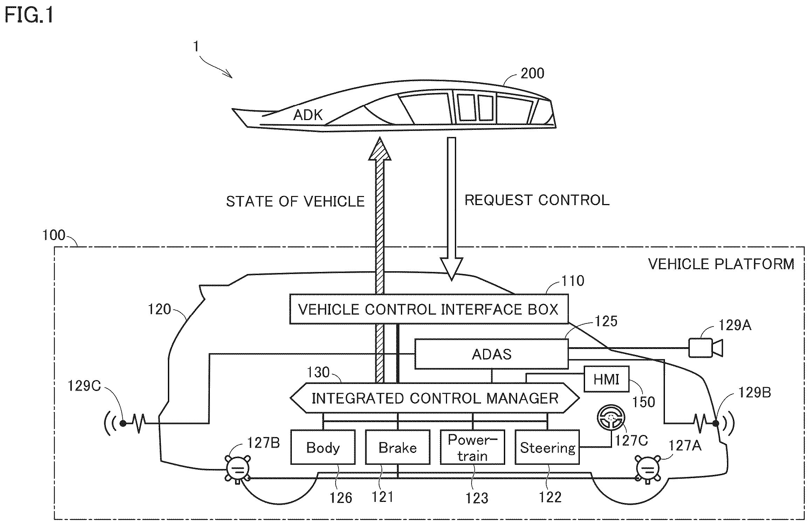

Fig. 1 shows a schematic configuration of a vehicle according to an embodiment. Referring to Fig. 1, a vehicle 1 comprises a vehicle platform (VP) 100 and an autonomous driving kit (ADK) 200. VP 100 includes a vehicle control interface box (hereinafter denoted as "VCIB") 110 and a base vehicle 120. Adding VCIB 110 to base vehicle 120 forms VP 100 to allow ADK 200 to be detachably attached thereto. VCIB 110 is configured to communicate with both base vehicle 120 and ADK 200 via a communication bus. VCIB 110 may function as a gateway. Attaching ADK 200 to VP 100 completes vehicle 1. In the present embodiment, ADK 200 is attached to the rooftop of base vehicle 120. It should be noted, however, where ADK 200 is attached is changeable as appropriate.

Base vehicle 120 is, for example, a commercially available xEV (electrically driven vehicle). In the present embodiment, a battery electric vehicle (BEV) is employed as base vehicle 120. However, this is not exclusive, and base vehicle 120 may be an xEV other than a BEV. Base vehicle 120 includes an integrated control manager 130, a human-machine interface (HMI) 150, and a variety of types of systems and a variety of types of sensors (wheel speed sensors 127A and 127B, a steering angle sensor 127C, a camera 129A, radar sensors 129B and 129C, etc.) for controlling base vehicle 120. Integrated control manager 130 functions as a controller. Integrated control manager 130 operates based on a result of sensing by an in-vehicle sensor to generally control a variety of types of systems relevant to an operation of base vehicle 120. Integrated control manager 130 and HMI 150 are communicably interconnected. HMI 150 includes an input device and a notification device. Examples of the notification device include a display and a speaker. HMI 150 may include a touch panel display.

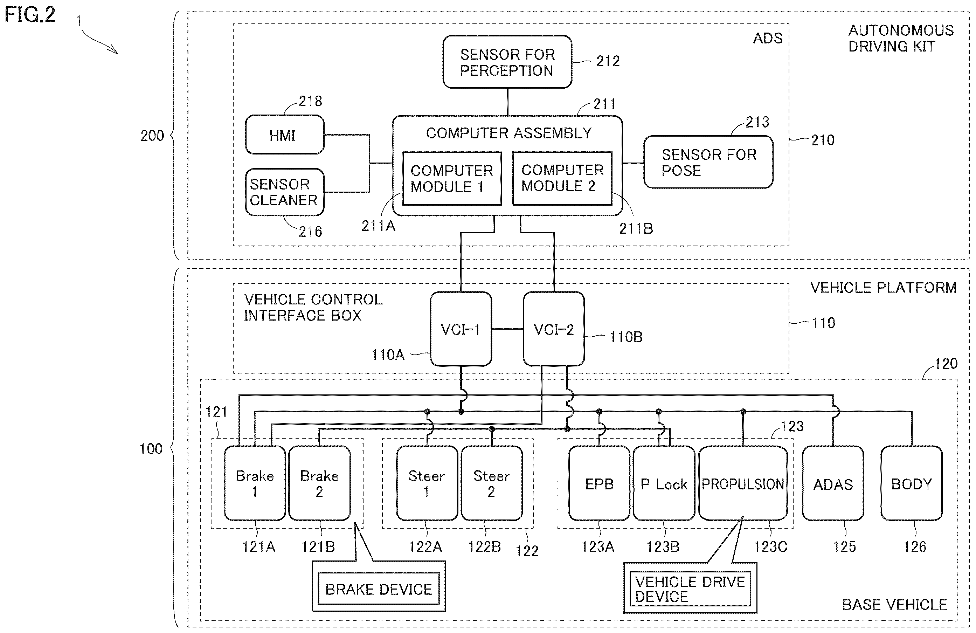

Fig. 2 specifically illustrates a system of vehicle 1. Referring to Fig. 2 together with Fig. 1, ADK 200 includes an autonomous driving system (hereinafter denoted as "ADS") 210 for autonomously driving vehicle 1. ADS 210 includes a computer assembly (hereinafter denoted as "ADSCOM") 211, a sensor for perception 212, a sensor for pose 213, a sensor cleaner 216, and a human-machine interface (HMI) 218.

ADSCOM 211 includes computer modules (hereinafter denoted as "ADCs") 211A and 211B. ADCs 211A and 211B each comprise a processor and a storage device that stores autonomous driving software using an API described hereinafter, and are each configured to be capable of executing the autonomous driving software by the processor. Sensor for perception 212 includes a sensor that obtains information (hereinafter also referred to as "environmental information") indicating an environment external to vehicle 1. Sensor for perception 212 may include at least one of a camera, a millimeter wave radar, and a lidar. Sensor for pose 213 obtains information (hereinafter also referred to as "pose information") for a pose of vehicle 1. Sensor for pose 213 may include a variety of types of sensors that sense an acceleration, angular velocity, and position of vehicle 1. HMI 218 includes an input device and a notification device.

Base vehicle 120 comprises a brake system 121, a steering system 122, a powertrain system 123, an advanced driver-assistance system (ADAS) 125, and a body system 126. In the present embodiment, each system comprises an electronic control unit (hereinafter also referred to as "ECU").

In vehicle 1, a control system for behaviors (travelling, stopping, and turning) of vehicle 1 has redundancy. Specifically, ADCs 211A and 211B provide instructions to a main system and a subordinate system, respectively. VCIB 110 includes a VCI control unit 110A for the main system and a VCI control unit 110B for the subordinate system. VCI control units 110A and 110B may each be a computer comprising a processor and a storage device. VCI control units 110A and 110B may directly communicate with each system or may communicate therewith via integrated control manager 130 shown in Fig. 1.

Brake system 121 includes a brake device, an operation unit (e.g., a brake pedal) that receives a braking operation from a user, and a brake control unit 121A for the main system and a brake control unit 121B for the subordinate system. Brake system 121 is configured such that brake control units 121A and 121B each control the brake device. The brake device is configured to decelerate vehicle 1. The brake device may be a hydraulic disk brake device. The brake device functions as a service brake. The brake device may have a brake hold function. While vehicle 1 is manually driven, brake control unit 121A or 121B controls the brake device in response to a braking operation performed by a user (e.g., a driver). The brake device applies a braking force to a wheel of vehicle 1. For example, while vehicle 1 is traveling, the user (e.g., the driver) can depress a brake pedal to decelerate and thus make vehicle 1 stationary.

Steering system 122 includes a steering device, an operation unit (e.g., a steering wheel) that receives a steering operation from the user, and a steering control unit 122A for the main system and a steering control unit 122B for the subordinate system. Powertrain system 123 includes a shift device (not shown), an EPB device 123A, a P-Lock device 123B, and a propulsion system 123C. "EPB" means an electric parking brake, and "P-Lock" means parking lock.

The shift device determines a shift range and switches a propulsion direction and a shift mode for base vehicle 120 in accordance with the determined shift range. The shift device comprises a transmission mechanism and an operation unit (e.g., a shift lever) that receives a shifting operation from the user. The shift device may shift gears by shift-by-wire. Propulsion system 123C comprises a vehicle drive device, an operation unit (e.g., an accelerator pedal) that receives an accelerating operation from the user, and a propulsion control unit that controls the vehicle drive device. The vehicle drive device imparts a propulsive force to a wheel in a propulsion direction indicated by the shift range. The propulsive force accelerates base vehicle 120. The vehicle drive device comprises a battery and a travelling motor that receives electric power from the battery.

EPB device 123A for example comprises a parking brake mechanism, an electric actuator, and an operation unit (e.g., an EPB switch) that receives an EPB request from the user. EPB device 123A may be configured to apply a braking force to a wheel by the electric actuator (e.g., a motor) to fix (or immobilize) the wheel. P-Lock device 123B for example comprises a parking lock mechanism, an actuator, and an operation unit (e.g., a parking switch) that receives a parking operation from the user. P-Lock device 123B may be configured to mechanically fix a rotational position of an output shaft of the transmission by a parking lock pole drivable by the actuator.

ADAS 125 for example includes an active safety system. Furthermore, ADAS 125 may include a system that reduces a driving burden imposed on a person who drives base vehicle 120 (hereinafter referred to as a "driver"). In the present embodiment, the system included in ADAS 125 is generally divided into a driver assistance system and a driving system other than the driver assistance system (hereinafter referred to as an "advanced driving system"). The driver assistance system is a system that reduces a burden of driving by the driver, alerts the driver, and responds when the driver is in an emergency, etc.

ADAS 125 may include as the driver assistance system at least one of a driver's seat belt reminder (D seat PSBR), a clearance sonar (CSR), a rear camera direction (RCD), a blind spot monitor (BSM), a rear cross traffic alert (RCTA), and an emergency driving stop system (EDSS). The D seat PSBR alerts the driver when the driver does not wear a seatbelt of the driver's seat. The CSR alerts the driver when the vehicle is approaching an obstacle. The RCD informs the driver that a pedestrian is present behind when the vehicle moves backward. The BSM informs the driver that another vehicle is present at a blind spot. The RCTA informs the driver when the vehicle moves backward that another vehicle is approaching from behind on the right/left side. The EDSS autonomously decelerates and stops the vehicle when the EDSS detects that the driver is in an emergency while the vehicle is traveling.

ADAS 125 may include as the advanced driving system at least one of vehicle stability control (VSC), parking support brake (PKSB), and pre-crash safety (PCS). The VSC suppresses lateral slip of the vehicle for enhanced stability for travelling. The PKSB actuates a brake to avoid collision while the vehicle moves slowly such as when the vehicle is parking. Furthermore, the PKSB also actuates the brake when the PKSB detects that an accelerator operation is erroneously performed in place of a brake operation while the vehicle is traveling at a low speed. The PCS actuates the brake to avoid collision or mitigate damage before collision in a wider speed range than the PKSB does.

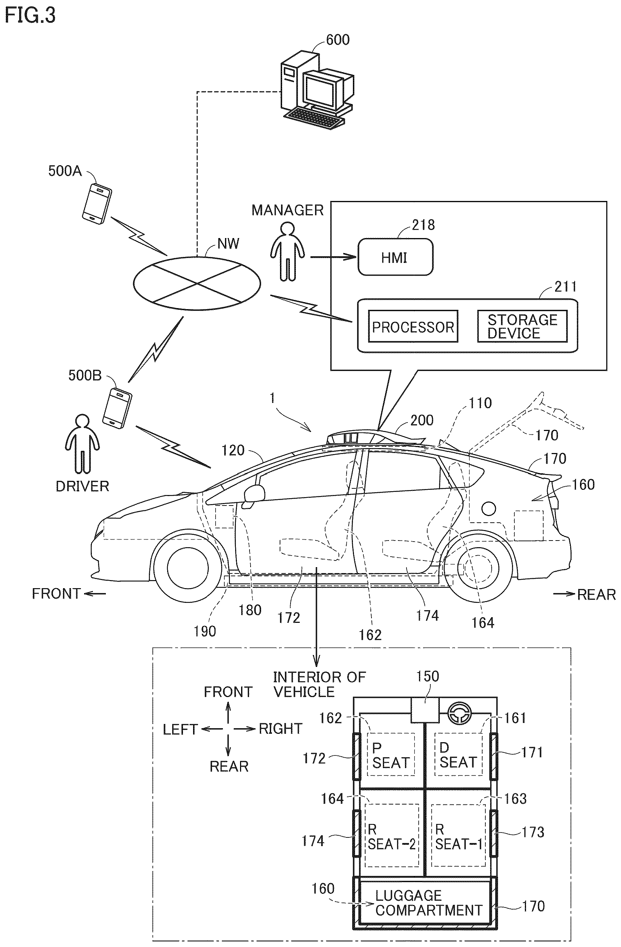

Fig. 3 is a diagram for illustrating a vehicle management system according to the present embodiment.

Referring to Fig. 3, the vehicle management system includes mobile terminals 500A and 500B and a stationary terminal 600. Terminal 600 is for example a server comprising a display device and an input device. Mobile terminals 500A and 500B are each for example a smartphone equipped with a touch panel display and a speaker. The smartphone incorporates a computer. It should be noted, however, that each terminal can be changed in configuration, as appropriate.

Terminal 600, mobile terminal 500A, and HMI 218 (see Fig. 2) of ADK 200 each function as a manager terminal. Specifically, HMI 218 functions as the manager terminal in cooperation with ADSCOM 211. A manager of vehicle 1 (hereinafter simply referred to as a "manager") has a right to operate the manager terminal. The manager terminal is configured to be operable by the manager. Terminal 600 and mobile terminal 500A are each configured to be capable of communicating with ADK 200 via a communication network NW. Mobile terminal 500A is carried by the manager.

In contrast, mobile terminal 500B and HMI 150 of base vehicle 120 (see Fig. 1) each function as a driver terminal. Specifically, HMI 150 functions as the driver terminal in cooperation with integrated control manager 130. The driver (a person who drives base vehicle 120) has a right to operate the driver terminal. The driver terminal is configured to be operable by the driver. Mobile terminal 500B is configured to be capable of communicating with base vehicle 120. Mobile terminal 500B is carried by the driver. In the present embodiment, the driver terminal and the manager terminal are configured to be capable of communicating with each other.

As shown in Fig. 3 at a lower portion, base vehicle 120 further comprises seats 161 to 164 and doors 171 to 174. Seat 161 is a D seat (a driver's seat: a first front seat). In a vicinity of seat 161 are disposed a variety of types of operation units (e.g., a steering wheel, a shift lever, an accelerator pedal, a brake pedal, an EPB switch, and a parking switch) for manual driving, and HMI 150 (e.g., a meter panel, a center display, and a navigation system). Seat 162 is a P seat (a front passenger seat: a second front seat). Seat 163 is an R seat (a first rear seat) on the right side (behind the driver's seat). Seat 164 is an R seat (a second rear seat) on the left side (behind the front passenger seat). Doors 171, 172, 173 and 174 are doors provided for seats 161, 162, 163 and 164, respectively, for entering/exiting the vehicle. Doors 171 to 174 are each provided with a door lock device to switch locking/unlocking the corresponding door. When the door lock device closes and locks the door, the door is kept closed. When the door lock device unlocks the door, the door is allowed to open. Door 171 and door 172 correspond to an example of a "first door" and a "second door", respectively, according to the present disclosure. Doors 173 and 174 each correspond to an example of a "third door" according to the present disclosure.

Base vehicle 120 further comprises a luggage compartment 160 and a luggage compartment door 170 provided for luggage compartment 160. In the present embodiment, a sealed-type luggage compartment (e.g., a trunk) is adopted as luggage compartment 160. Therefore, when luggage compartment door 170 is closed, luggage compartment 160 is sealed. When luggage compartment door 170 is opened, luggage compartment 160 is opened. This is not exclusive, however, and an open-type luggage compartment (e.g., a luggage space) may be adopted as luggage compartment 160. Examples of luggage compartment door 170 include a back door, a rear hatch door, and a tailgate. Luggage compartment door 170 is provided with a luggage compartment lock device to switch locking/unlocking luggage compartment door 170. When the luggage compartment lock device closes and locks luggage compartment door 170, luggage compartment door 170 is kept closed. When the luggage compartment lock device unlocks luggage compartment door 170, luggage compartment door 170 is allowed to be opened.

Base vehicle 120 further comprises an air conditioner 180. Air conditioner 180 is configured to perform air conditioning of a space in a vehicular cabin including seats 161 to 164. The air conditioning may for example be adjusting air in at least one of temperature, humidity, cleanliness, and airflow. Fig. 3 shows a power storage device 190, which functions as the battery for the vehicle drive device described above. Power storage device 190 supplies electric power not only to the traveling motor but also to air conditioner 180 and an auxiliary battery (not shown).

Body system 126 illustrated in Fig. 2 includes an entering/exiting ECU that controls the door lock devices for doors 171 to 174, a luggage compartment ECU that controls the luggage compartment lock device, and an air conditioning ECU that controls air conditioner 180.

In the present embodiment, a signal defined with an application program interface (API) is used for communication between ADK 200 and VCIB 110. Hereinafter, the signal defined with the API will also be referred to as an "API signal". ADK 200 is configured to process the API signal. ADK 200 outputs a variety of types of commands to VCIB 110 in accordance with the API. Hereinafter, the variety of types of commands output from ADK 200 to VCIB 110 will each also be referred to as an "API command". ADK 200 receives a variety of types of signals indicating a state of base vehicle 120 from VCIB 110 in accordance with the API. Hereinafter, the variety of types of signals that ADK 200 receives from VCIB 110 will each also be referred to as an "API status". The API command and the API status both correspond to the API signal.

In the present embodiment, ADK 200 uses API commands described below.

A mode setting API is an API command to request a transition to a prescribed control mode. More specifically, according to the present embodiment, ADK 200 is configured to operate in one control mode selected from a plurality of types of control modes. The mode setting API corresponds to a mode signal indicating one selected control mode.

In the present embodiment, the plurality of types of control modes executed by ADK 200 are distinguished based on: whether the vehicle is driven autonomously or manually; whether a person is present in the driver's seat (seat 161) of vehicle 1, and how vehicle 1 is used. This configuration facilitates customizing vehicle 1 in accordance with how vehicle 1 is used. Specifically, according to the present embodiment, ADK 200 operates in any of first to third manual driving modes and first to fifth autonomous driving modes described hereinafter. The manual driving modes are a driving mode in which base vehicle 120 is under the control of a human (e.g., the driver). The autonomous driving modes are each a driving mode in which base vehicle 120 is under the control of ADK 200.

The first manual driving mode is a control mode in which vehicle 1 is used for personal use and vehicle 1 is manually driven by a person in seat 161. The second manual driving mode is a control mode in which vehicle 1 is used for passenger transportation and vehicle 1 is manually driven by a person in seat 161. The third manual driving mode is a control mode in which vehicle 1 is used for logistics and vehicle 1 is manually driven by a person in seat 161.

The first autonomous driving mode is a control mode in which vehicle 1 is used for personal use and vehicle 1 is controlled to be autonomously driven with a person present in seat 161. The second autonomous driving mode is a control mode in which vehicle 1 is used for passenger transportation and vehicle 1 is controlled to be autonomously driven with a person absent in seat 161. The third autonomous driving mode is a control mode in which vehicle 1 is used for passenger transportation and vehicle 1 is controlled to be autonomously driven with a person present in seat 161. The fourth autonomous driving mode is a control mode in which vehicle 1 is used for logistics and vehicle 1 is controlled to be autonomously driven with a person absent in seat 161. The fifth autonomous driving mode is a control mode in which vehicle 1 is used for logistics and vehicle 1 is controlled to be autonomously driven with a person present in seat 161.

A function setting API is an API command to request storing a function setting table for each control mode. The function setting table indicates that whether each of a plurality of functions of base vehicle 120 is enabled or disabled. The function setting table corresponds to an example of "function setting information" according to the present disclosure.

For example, the manager creates a function setting table for each control mode and inputs to ADK 200 the function setting table created for each control mode. A storage device (Fig. 3) of ADK 200 associates identification information (a mode ID) of a control mode with a function setting table corresponding to that control mode to distinguish and thus store the function setting table for the control mode. The function setting API includes a function setting table for each of a plurality of types of control modes (e.g., the first to third manual driving modes and first to fifth autonomous driving modes described above) in which ADK 200 is operable. Hereinafter, the function setting tables for these control modes (i.e., all function setting tables for ADK 200) will collectively be referred to as "ADK setting information". As will more specifically be described hereinafter, when VCIB 110 receives the ADK setting information from ADK 200, the VCIB stores the received ADK setting information. Subsequently, whenever a transition to a control mode is requested by the mode setting API, VCIB 110 requests base vehicle 120 to enable or disable each function based on the function setting table corresponding to the control mode indicated by the mode setting API.

A propulsion direction command is an API command to request to switch a shift range (drive (move forward)/reverse (move backward)). An acceleration command is an API command indicating acceleration of the vehicle. The acceleration command requests acceleration (+) and deceleration (-) for a direction indicated by a propulsion direction status described hereinafter. A front wheel steering angle command is an API command to request to steer the front wheels of the vehicle. An immobilization command is an API command to request application of or release from immobilization.

A D-seat door API is an API command to request locking or unlocking a door (e.g., door 171) for the driver's seat. A P-seat door API is an API command to request locking or unlocking a door (e.g., door 172) for the front passenger seat. A first R-seat door API is an API command to request locking or unlocking a door (e.g., door 173) for the seat behind the driver's seat. A second R-seat door API is an API command to request locking or unlocking a door (e.g., door 174) for the seat behind the front passenger seat. A luggage compartment door API is an API command to request locking or unlocking the luggage compartment door. An all-door API is an API command to request locking or unlocking all of the entering/exiting doors and the luggage compartment door simultaneously. Hereinafter, the D-seat door API, the P-seat door API, the first R-seat door API, the second R-seat door API, and the luggage compartment door API will each also be referred to as an "individual door API".

A front row air conditioning drive command is an API command to request turning on or off air conditioning for the front seats. A rear row air conditioning drive command is an API command to request turning on or off air conditioning for the rear seats. A front row, right side air conditioning set temperature command is an API command indicating an air conditioning set temperature for the right front seat (e.g., seat 161). A front row, left side air conditioning set temperature command is an API command indicating an air conditioning set temperature for the left front seat (e.g., seat 162). A rear row, right side air conditioning set temperature command is an API command indicating an air conditioning set temperature for the right rear seat (e.g., seat 163). A rear row, left side air conditioning set temperature command is an API command indicating an air conditioning set temperature for the left rear seat (e.g., seat 164). A front row air conditioning air volume setting command and a rear row air conditioning air volume setting command are API commands indicating air volumes (or fan levels) for air conditioning for the front seats and the rear seats, respectively. A front row air outlet mode command is an API command indicating an air outlet mode for the front seats. The air outlet mode for the front seats may for example be any of a mode allowing air to flow to an upper body and feet, a mode allowing air to only flow to the upper body, a mode allowing air to only flow to the feet, and a mode allowing air to flow to the feet and a windshield (or a defogger). A rear row air outlet mode command is an API command indicating an air outlet mode for the rear seats. The air outlet mode for the rear seats may for example be any of a mode allowing air to flow to an upper body and feet, a mode allowing air to only flow to the upper body, and a mode allowing air to only flow to the feet. An internal air circulation setting command is an API command to request switching air conditioning by introduction of external air to air conditioning by internal air circulation and vice versa. Hereinafter, these API commands for air conditioning will also collectively be referred to as an "air conditioning API".

Some API commands used in vehicle 1 have been described above. In the present embodiment, VCIB 110 is configured to mediate communication of a signal between ADK 200 and base vehicle 120 (more specifically, a control system included in base vehicle 120). More specifically, VCIB 110 receives a variety of types of API commands from ADK 200. Upon receiving an API command from ADK 200, VCIB 110 converts the API command into a format for a signal executable by the control system of base vehicle 120. Hereinafter, an API command converted into a format of a signal executable by the control system of base vehicle 120 will also be referred to as an "internal command". Upon receiving an API command from ADK 200, VCIB 110 outputs to base vehicle 120 an internal command corresponding to the API command. Base vehicle 120 has the control system constructed by a plurality of controllers (e.g., integrated control manager 130 and each system's controller shown in Figs. 1 and 2).

Hereinafter, the API status will be described. ADK 200 understands a state of base vehicle 120 for example through API statuses described below.

A control mode status is an API status indicating the current control mode of base vehicle 120. A control mode status indicates identification information of a control mode. For example, when the current control mode is the first manual driving mode, the second manual driving mode, the third manual driving mode, the first autonomous driving mode, the second autonomous driving mode, the third autonomous driving mode, the fourth autonomous driving mode, or the fifth autonomous driving mode, the control mode status may have a value of "1", "2", "3", "4", "5", "6", "7", or "8", respectively.

A propulsion direction status is an API status indicating the current shift range. A moving direction status is an API status indicating a direction in which the vehicle moves. The moving direction status outputs a value of "0" when the vehicle moves forward, a value of "1" when the vehicle moves backward, and a value of "2" (Standstill) when all the wheels (four wheels) indicate a speed of "0" for a predetermined period of time. A vehicle speed status is an API status indicating a speed of the vehicle in its longitudinal direction. The vehicle speed status outputs an absolute value of vehicular speed. An immobilization status is an API status indicating a state of immobilization (e.g., a state of EPB device 123A and a state of P-Lock device 123B).

A D-seat door status, a P-seat door status, a first R-seat door status, and a second R-seat door status are API statuses indicating states of doors for the driver's seat, the front passenger's seat, the seat behind the driver's seat, and the seat behind the front passenger's seat, respectively (i.e., whether the doors are locked/unlocked). A luggage compartment door status is an API status indicating a state of the luggage compartment door (i.e., whether the door is locked/unlocked).

A front row air conditioning drive status and a rear row air conditioning drive status are API statuses indicating whether air conditioning for the front seats and that for the rear seats, respectively, are driven (or turned on/off). A front row, right side air conditioning set temperature status, a front row, left side air conditioning set temperature status, a rear row, right side air conditioning set temperature status, and a rear row, left side air conditioning set temperature status are API statuses indicating set temperatures for air conditioning for the right front seat, the left front seat, the right rear seat, and the left rear seat, respectively. A front row air conditioning fan level status and a rear row air conditioning fan level status are API statuses indicating air volumes (or fan levels) for air conditioning for the front seats and the rear seats, respectively. A front row air outlet mode status and a rear row air outlet mode status are API statuses indicating an air outlet mode for the front seats and that for the rear seats, respectively. An internal air circulation status is an API status indicating an air conditioning mode (external air introduction/internal air circulation).

Some API statuses used in vehicle 1 have been described above. VCIB 110 receives values of sensing by a variety of types of sensors and state determination results from base vehicle 120 and outputs to ADK 200 a variety of types of API statuses indicating a state of base vehicle 120. VCIB 110 obtains an API status having a value set to indicate a state of base vehicle 120 and outputs the obtained API status to ADK 200. The variety of types of API statuses are stored in a storage device of VCI control unit 110A and that of VCI control unit 110B, for example, and updated sequentially.

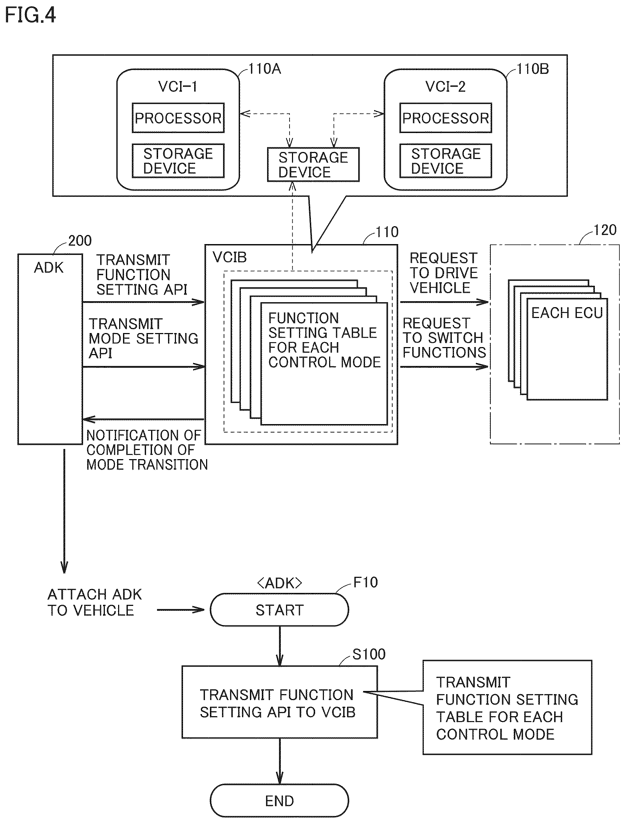

Fig. 4 outlines vehicle management according to the present embodiment. With reference to Fig. 4 together with Figs. 1 to 3, when ADK 200 is attached to VP 100, ADK 200 (more specifically, ADSCOM 211) executes a process flow F10. In the flowchart, "S" means a step. Control by ADK 200 is basically executed by ADC 211A. Note, however, that when the main system fails, ADC 211B performs each process instead of ADC 211A.

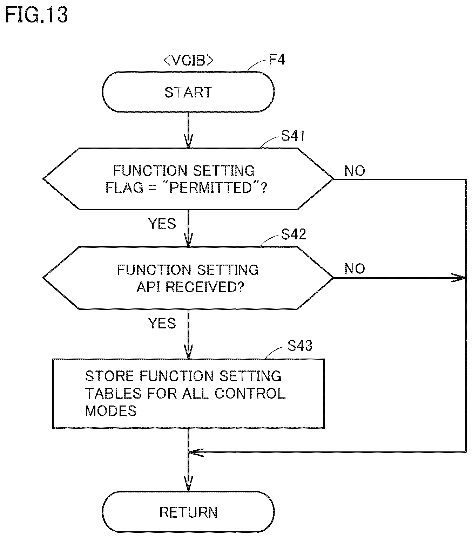

In the process flow F10, ADK 200 in S100 transmits to VCIB 110 a function setting API including ADK setting information (e.g., the function setting table for each of the first to third manual driving modes and the first to fifth autonomous driving modes described above). If VCIB 110 is in operation, VCIB 110 can receive the function setting API transmitted from ADK 200. Upon receiving the function setting API, VCIB 110 stores the ADK setting information (see S43 in Fig. 13 described hereinafter). When the step of S100 is performed, the process flow F10 ends.

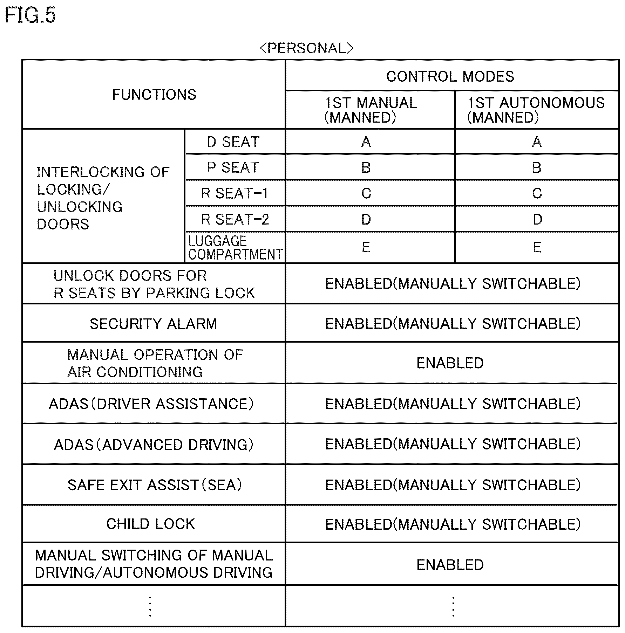

As described above, VCIB 110 is configured to receive from ADK 200 and store a function setting table for each control mode. Hereinafter, an example of the function setting table for each control mode will be described with reference to Figs. 5 to 7. Each function setting table shown in Figs. 5 to 7 indicates that a function of interlocking locking/unlocking the entering/exiting doors (hereinafter referred to as a "door interlocking function"), a function of interlocking locking/unlocking the luggage compartment door (hereinafter referred to as a "luggage compartment interlocking function"), a parking-time door unlocking function, a security alarm, a function allowing manual operation of air conditioning, ADAS 125's driver assistance function and advanced driving function, a safe exit assist (SEA), a child lock function, and a function of manually switching manual driving/autonomous driving (hereinafter referred to as a "driving mode switching function") are each enabled (constantly held on), enabled (manually switchable on/off) or disabled (constantly held off). In each of the tables shown in Figs. 5 to 7, "enabled (constantly held on)" is indicated as "enabled", "enabled (manually switchable on/off)" is indicated as "enabled (manually switchable)", and "disabled (constantly held off)" is indicated as "disabled". For the door interlocking function and the luggage compartment interlocking function, control groups for the door and luggage compartment lock devices are indicated.

The door interlocking function is a function of interlocking an entering/exiting door with locking/unlocking another entering/exiting door. The luggage compartment interlocking function is a function of interlocking locking/unlocking the luggage compartment door with locking/unlocking the entering/exiting doors. The parking-time door unlocking function is a function of unlocking the doors for the rear seats when a parking lock is applied. The security alarm is a function of issuing an alarm when theft (intrusion of another person into the vehicle) is detected. The function allowing manual operation of air conditioning is a function of operating air conditioner 180 in accordance with an operation received from the user. The driver assistance function of ADAS 125 is a function for the driver assistance system described above. The advanced driving function of ADAS 125 is a function for the advanced driving system described above. The SEA is a function of notifying the user of another vehicle approaching the vehicle when the user exits the vehicle. The child lock function is a function of prohibiting a door for a rear seat from being manually opened inside the vehicle. The driving mode switching function is a function of switching the manual driving mode to the autonomous driving mode and vice versa in accordance with an operation received from the user.

Hereinafter, a control mode in which the vehicle is used for a personal use will also be referred to as a "personal mode". Fig. 5 shows an example of a function setting table for the personal mode. Furthermore, a function setting table corresponding to the first manual driving mode will be referred to as a "first personal function table", and a function setting table corresponding to the first autonomous driving mode will be referred to as a "second personal function table".

In the example indicated in Fig. 5, a function setting table common to the first manual driving mode and the first autonomous driving mode is set. The first personal function table and the second personal function table have same setting values for all functions. Fig. 5 indicates that luggage compartment door 170 and doors 171 to 174 each belong to a different control group (i.e., A, B, C, D, or E), which means that the door interlocking function and the luggage compartment interlocking function are both "disabled" for all of the entering and exiting doors (doors 171 to 174). Therefore, in the first autonomous driving mode, ADK 200 can use the individual door API to control luggage compartment door 170 and doors 171 to 174 to lock/unlock each door individually. ADK 200 can also use the all-door API to control luggage compartment door 170 and doors 171 to 174 to collectively lock/unlock the doors. In contrast, in the first manual driving mode, the driver can instruct the control system of base vehicle 120 via the driver terminal to lock or unlock a door individually among luggage compartment door 170 and doors 171 to 174 that is designated by the driver or to lock or unlock all of the doors collectively.

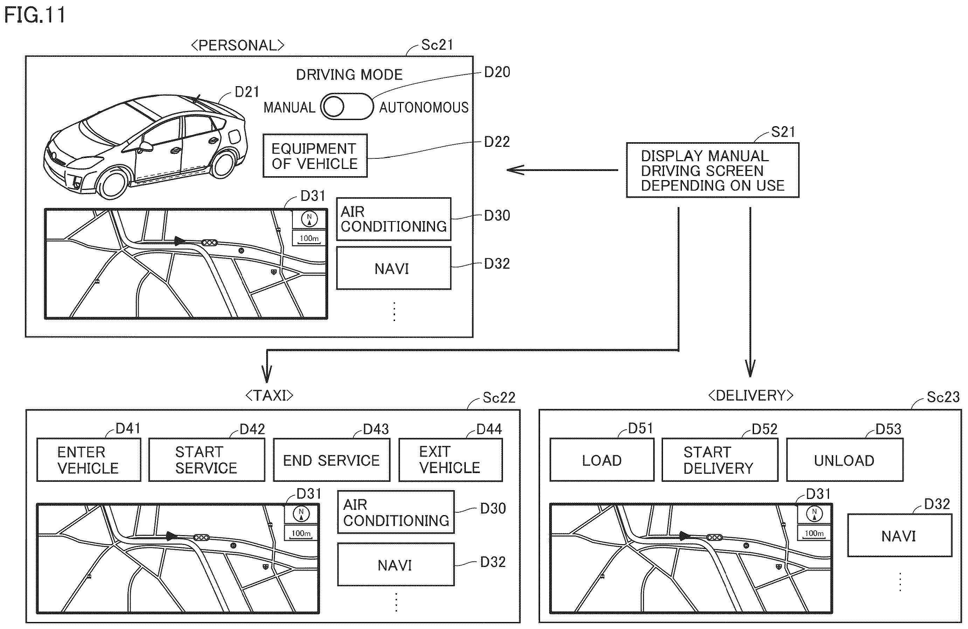

In the function setting table indicated in Fig. 5, the parking-time door unlocking function, the security alarm, the driver assistance function, the advanced driving function, the SEA, and the child lock function are each set "enabled (manually switchable on/off)". The driver can switch these functions to be turned on (or activated)/turned off (or inactivated) for example via the driver terminal. The function allowing manual operation of air conditioning is set "enabled (constantly held on)". The driver can change a set temperature for air conditioner 180 for example by operating the driver terminal. The driving mode switching function is also set "enabled (constantly held on)". Although details will be described hereinafter, the driver can switch the first manual driving mode to the first autonomous driving mode and vice versa for example by operating the driver terminal (see Fig. 11).

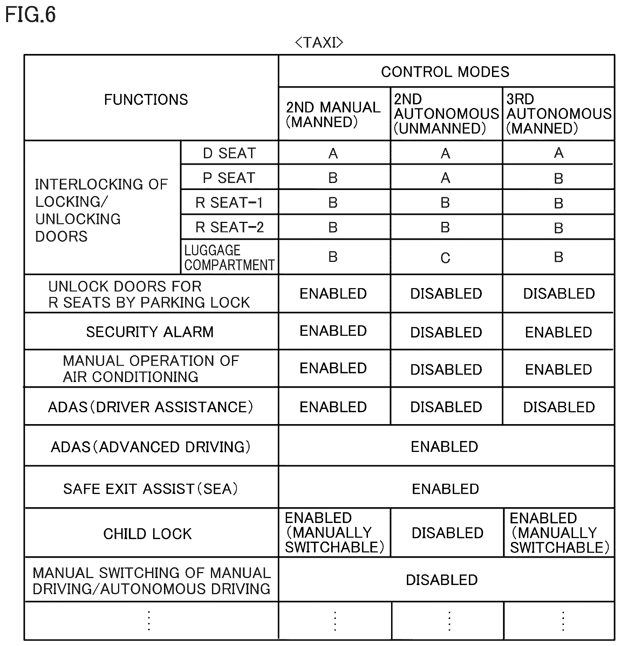

Hereinafter, a control mode in which the vehicle is used for passenger transportation will also be referred to as a "taxi mode". Fig. 6 shows an example of a function setting table for the taxi mode. A function setting table corresponding to the second manual driving mode is referred to as a "first taxi function table", a function setting table corresponding to the second autonomous driving mode is referred to as a "second taxi function table", and a function setting table corresponding to the third autonomous driving mode is referred to as a "third taxi function table". Vehicle 1 in the taxi mode can perform a taxi operation.

As shown in Fig. 6, in each of the first and third taxi function tables, a control group to which door 171 belongs, i.e., a control group (A), is different from a control group to which luggage compartment door 170 and doors 172 to 174 belong, i.e., a control group (B). Lock/unlock control is applied for each control group. Therefore, locking/unlocking door 171 is singly performed. In contrast, locking/unlocking luggage compartment door 170 and doors 172 to 174 is collectively controlled.

In the second taxi function table, a control group to which doors 171 and 172 belong, i.e., the control group (A), a control group to which doors 173 and 174 belong, i.e., the control group (B), and a control group to which luggage compartment door 170 belongs, i.e., a control group (C), are different from one another. Therefore, locking/unlocking the doors for the front seats (i.e., doors 171 and 172) is collectively controlled. Locking/unlocking the doors for the rear seats (i.e., doors 173 and 174) is collectively controlled. Locking/unlocking luggage compartment door 170 is singly controlled.

The fact that doors 171 and 172 belong to the same control group means that a "first function" according to the present disclosure is enabled. The fact that door 171 and at least one of doors 173 and 174 belong to the same control group means that a "second function" according to the present disclosure is enabled. The fact that door 172 and at least one of doors 173 and 174 belong to the same control group means that a "third function" according to the present disclosure is enabled. The fact that luggage compartment door 170 and door 171 belong to the same control group means that a "fourth function" according to the present disclosure is enabled. The fact that luggage compartment door 170 and door 172 belong to the same control group means that a "fifth function" according to the present disclosure is enabled. The fact that luggage compartment door 170 and at least one of doors 173 and 174 belong to the same control group means that a "sixth function" according to the present disclosure is enabled. As shown in Fig. 6, the first taxi function table indicates that the third function, the fifth function, and the sixth function are each enabled, and that the first function, the second function, and the fourth function are each disabled. The second taxi function table indicates that the first function is enabled and that the second to sixth functions are each disabled.

For passenger transportation, vehicle 1 keeps door 171 locked, and operates for example as described below. Vehicle 1 unlocks the doors for the rear seats (i.e., doors 173 and 174) before a passenger enters vehicle 1. Then, vehicle 1 locks all of the doors (i.e., luggage compartment door 170 and doors 171 to 174) when the vehicle starts traveling. Thereafter when the passenger exits vehicle 1, the vehicle again unlocks the doors for the rear seats. An instruction (a lock/unlock command) for causing the vehicle to perform such a passenger transporting operation is issued by the driver in the manual driving mode whereas the instruction is issued by ADK 200 in the autonomous driving mode. The door and luggage compartment lock devices are thus controlled.

In the second manual driving mode, when a passenger enters the vehicle, the vehicle starts traveling, and the passenger exits the vehicle, the driver operates the driver terminal to instruct the control system of base vehicle 120 to lock or unlock the doors for the rear seats or lock all of the doors. The control system of base vehicle 120 refers to the first taxi function table to control locking/unlocking for each of two groups, one consisting of the door for the driver's seat and the other consisting of those for the remaining seats. When a passenger enters the vehicle, luggage compartment door 170 and doors 172 to 174 are unlocked in an interlocked manner. This allows the passenger to seat on any of seat 162 (the front passenger seat) and seats 163 and 164 (the rear seats). Furthermore, the passenger can place luggage in luggage compartment 160, as necessary. When the vehicle starts traveling, the vehicle has all of the doors locked. Thereafter when the passenger exits the vehicle, luggage compartment door 170 and doors 172 to 174 are again unlocked in an interlocked manner. This allows the passenger to exit vehicle 1, unload luggage from luggage compartment 160, etc.

In the second autonomous driving mode, when a passenger enters the vehicle, the vehicle starts traveling, and the passenger exits the vehicle, ADK 200 for example uses the second R-seat door API or the all-door API to instruct the control system of base vehicle 120 to lock or unlock the doors for the rear seats or lock all of the doors. The control system of base vehicle 120 refers to the second taxi function table to control locking/unlocking for each of three groups, one consisting of the doors for the front seats, another consisting of the doors for the rear seats, and the other consisting of the luggage compartment door. Locking/unlocking door 171 and locking/unlocking door 172 are interlocked. Therefore, door 172 is also kept locked together with door 171. This can prevent a passenger from entering the vehicle and seating on a front seat (that is, the driver's seat or the front passenger seat) and hence driving vehicle 1. When a passenger enters the vehicle, doors 173 and 174 are unlocked in an interlocked manner. This allows the passenger to only enter the vehicle and sit in seats 163 and 164 (or the rear seats). When this is done, whether to unlock luggage compartment door 170 is determined by ADK 200. ADK 200 may unlock luggage compartment door 170 together with the doors for the rear seat only when a prescribed condition is established. This configuration allows the manager to permit only a specific passenger to use luggage compartment 160. For example, the manager may permit only a passenger who has paid a prescribed fee to use luggage compartment 160. The manager terminal may manage each passenger's information in association with the passenger's identification information. The manager may issue an instruction to ADK 200 via the manager terminal. When the vehicle starts traveling, the vehicle has all of the doors locked by the all-door API. Thereafter, when the passenger exits the vehicle, doors 173 and 174 are again unlocked in an interlocked manner. If luggage compartment door 170 is unlocked when the passenger enters the vehicle, ADK 200 also unlocks luggage compartment door 170 when the passenger exits the vehicle.

In the third autonomous driving mode, when a passenger enters the vehicle, the vehicle starts traveling, and the passenger exits the vehicle, ADK 200 for example uses the second R-seat door API or the all-door API to instruct the control system of base vehicle 120 to lock or unlock the doors for the rear seats or lock all of the doors. The control system of base vehicle 120 refers to the third taxi function table to control locking/unlocking for each of two groups, one consisting of the door for the driver's seat and the other consisting of the remaining doors. When a passenger enters the vehicle, luggage compartment door 170 and doors 172 to 174 are unlocked in an interlocked manner. This allows the passenger to sit in either the front passenger seat or a rear seat. Furthermore, the passenger can put luggage in luggage compartment 160, as necessary. When the vehicle starts traveling, the vehicle has all of the doors locked by the all-door API. Thereafter, when the passenger exits the vehicle, luggage compartment door 170 and doors 172 to 174 are again unlocked in an interlocked manner. This allows the passenger to exit vehicle 1, take luggage out of luggage compartment 160, etc.

According to the second and third taxi function tables, how locking/unlocking each door for passenger transportation is controlled can be changed, depending on whether a person is present in the driver's seat, without changing a command issued from ADK 200 to VCIB 110. This allows commonization of a control program (or an algorithm) in a plurality of types of control modes of ADK 200. The function setting table (the function setting information) helps a developer or a vendor of the autonomous driving system to customize controlling the vehicle for each control mode.

As shown in Fig. 6, the parking-time door unlocking function is set "enabled (constantly held on)" in the first taxi function table and set "disabled" in each of the second and third taxi function tables. Disabling (or constantly holding off) the parking-time door unlocking function in the autonomous driving mode suppresses interference between controlling by ADK 200 and controlling by base vehicle 120. The security alarm is set "enabled (or constantly held on)" in each of the first and third taxi function tables, and set "disabled" in the second taxi function table. Disabling (or constantly holding off) the security alarm when there is no person in the driver's seat can prevent a passenger from becoming uneasy as the alarm might otherwise be erroneously operated. The function allowing manual operation of air conditioning is set "enabled (or constantly held on)" in each of the first and third taxi function tables, and set "disabled" in the second taxi function table. When the function allowing manual operation of air conditioning is turned off, ADK 200 can use the above-described air conditioning API to control air conditioner 180. Disabling (or constantly holding off) the function allowing manual operation of air conditioning when there is no person in the driver's seat can prevent a passenger from performing an air conditioning operation and hence vehicle 1 from having an increased risk of running out of power. The driver assistance function is set "enabled (or constantly held on)" in the first taxi function table, and set "disabled" in each of the second and third taxi function tables. Disabling (or constantly holding off) the driver assistance function in the autonomous driving mode can prevent erroneous operation of the driver assistance system of ADAS 125. The advanced driving function is set "enabled (or constantly held on)" in all of the first to third taxi function tables. When ADK 200 applies autonomous driving control predicated on using the advanced driving system (such as the VSC described above), vehicle 1 can be autonomously driven at a high level of technology. Furthermore, it also allows an autonomous driving program of ADK 200 to be simplified. The SEA is also set "enabled (or constantly held on)" in all of the first to third taxi function tables. This allows a passenger to exit the vehicle with ease. The child lock function is set "enabled (manually switchable on/off)" in each of the first and third taxi function tables, and set "disabled" in the second taxi function table. A person in the driver's seat can switch the child lock function on/off depending on whether there is a child as a passenger. The driving mode switching function is set "disabled" in all of the first to third taxi function tables. This can prevent the driver's operation or a passenger's operation from switching a driving mode against the manager's intention.

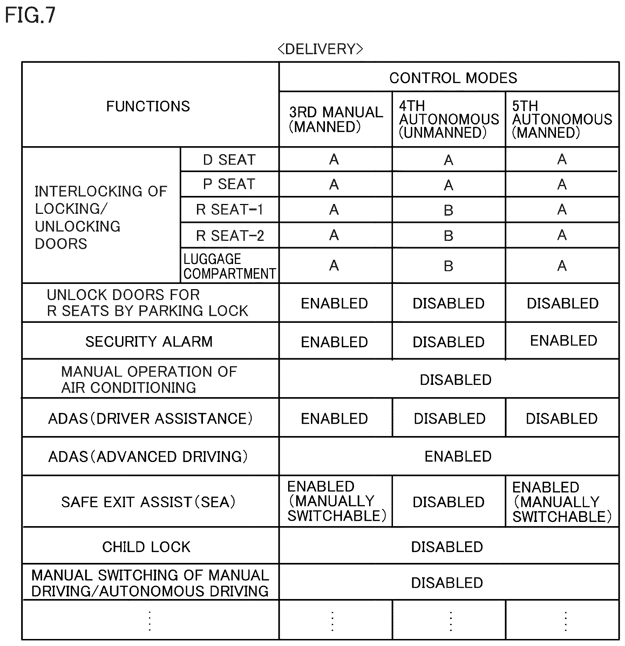

Hereinafter, a control mode in which the vehicle is used for logistics will also be referred to as a "delivery mode". Fig. 7 shows an example of a function setting table for the delivery mode. A function setting table corresponding to the third manual driving mode is referred to as a "first delivery function table", a function setting table corresponding to the fourth autonomous driving mode is referred to as a "second delivery function table", and a function setting table corresponding to the fifth autonomous driving mode is referred to as a "third delivery function table". Vehicle 1 in the delivery mode can perform delivery.

As shown in Fig. 7, in each of the first and third delivery function tables, luggage compartment door 170 and doors 171 to 174 all belong to the same control group (A). Thus, locking/unlocking all of the doors is collectively controlled. In contrast, in the second delivery function table, a control group to which doors 171 and 172 belong, i.e., the control group (A), is different from a control group to which luggage compartment door 170 and doors 173 and 174 belong, i.e., the control group (B). Therefore, locking/unlocking the doors for the front seats (i.e., doors 171 and 172) is collectively controlled. Furthermore, locking/unlocking luggage compartment door 170 and doors 173 and 174 is collectively controlled.

For delivery (or logistics), vehicle 1 for example operates as described below. Before loaded, vehicle 1 unlocks the luggage compartment door and the doors for the rear seats. This allows luggage to be loaded in luggage compartment 160 and on seats 163 and 164. Then, when vehicle 1 starts traveling, the vehicle locks all of the doors (luggage compartment door 170 and doors 171 to 174). Thereafter, when vehicle 1 is unloaded, the vehicle again unlocks the luggage compartment door and the doors for the rear seats. An instruction (a lock/unlock command) for causing the vehicle to perform such a delivery operation is issued by the driver in the manual driving mode whereas the instruction is issued by ADK 200 in the autonomous driving mode. The door and luggage compartment lock devices are thus controlled.

In the third manual driving mode, when the vehicle is loaded, starts traveling, and is unloaded, the driver operates the driver terminal to instruct the control system of base vehicle 120 to lock or unlock the doors for the rear seats or lock all of the doors. The control system of base vehicle 120 refers to the first delivery function table to collectively control locking/unlocking all of the doors. When the vehicle is loaded, the vehicle has all of the doors unlocked in an interlocked manner. The driver can thus load at least one of luggage compartment 160 and seats 163 and 164 with luggage and then enter the vehicle and sit in seat 161 (the driver's seat). When the vehicle starts traveling, the vehicle has all of the doors locked. Thereafter, when the vehicle is unloaded, the vehicle has all of the doors again unlocked in an interlocked manner. The driver can thus exit vehicle 1 and unload luggage loaded in vehicle 1.

In the fourth autonomous driving mode, when the vehicle is loaded, starts traveling, and is unloaded, ADK 200 for example uses the second R-seat door API or the all-door API to instruct the control system of base vehicle 120 to lock or unlock the doors for the rear seats or lock all of the doors. The control system of base vehicle 120 refers to the second delivery function table to control locking/unlocking for each of two groups, one consisting of the doors for the front seats and the other consisting of the remaining doors. When the vehicle is loaded, luggage compartment door 170 and doors 173 and 174 are unlocked in an interlocked manner. The doors for the front seats remain locked, and loading luggage compartment 160 and seats 163 and 164 with luggage is only permitted. This can prevent the front seats (i.e., the driver's seat and the front passenger seat) from being loaded with luggage and hence vehicle 1 from being driven as the luggage collapses while the vehicle is travelling. Furthermore, delivery staff can enter the vehicle and sit in a rear seat. When the vehicle starts traveling, the vehicle has all of the doors locked by the all-door API. Thereafter, when the vehicle is unloaded, luggage compartment door 170 and doors 173 and 174 are again unlocked in an interlocked manner. The delivery staff can exit vehicle 1 and unload luggage loaded in vehicle 1.

In the fifth autonomous driving mode, when the vehicle is loaded, starts traveling, and is unloaded, ADK 200 for example uses the second R-seat door API or the all-door API to instruct the control system of base vehicle 120 to lock or unlock the doors for the rear seats or lock all of the doors. The control system of base vehicle 120 refers to the third delivery function table to collectively control locking/unlocking all of the doors. When the vehicle is loaded, the second R-seat door API is applied to unlock all of the doors in an interlocked manner. This allows delivery staff to load at least one of luggage compartment 160 and seats 163 and 164 with luggage, and then enter the vehicle and sit in seat 161 (the driver's seat). When the vehicle starts traveling, the all-door API is applied to lock all of the doors. Thereafter, when the vehicle is unloaded, the second R-seat door API is applied to again unlock all of the doors in an interlocked manner. The delivery staff can exit vehicle 1 and unload luggage loaded in vehicle 1.

According to the second and third delivery function tables, how locking/unlocking each door for delivery (or logistics) is controlled can be changed, depending on whether a person is present in the driver's seat, without changing a command issued from ADK 200 to VCIB 110. Furthermore, how locking/unlocking each door is controlled can be changed depending on the use without changing between the above-described taxi mode and the delivery mode a command issued from ADK 200 to VCIB 110. This allows commonization of a control program (or an algorithm) in a plurality of types of control modes of ADK 200. The function setting table (the function setting information) helps a developer or a vendor of the autonomous driving system to customize controlling the vehicle for each control mode.

As shown in Fig. 7, in the function setting table for the delivery mode, the parking-time door unlocking function, the security alarm, the driver assistance function, the advanced driving function, and the driving mode switching function are set in a manner conforming to the function setting table for the taxi mode. Note, however, that the function allowing manual operation of air conditioning is set "disabled" in all of the first to third delivery function tables. This allows ADK 200 to apply the above-described air conditioning API to control temperature for luggage. The SEA is set "enabled (manually switchable on/off)" in each of the first and third delivery function tables, and set "disabled" in the second delivery function table. A person in the driver's seat can switch the SEA on/off based on how many persons there are as the delivery staff. The child lock function is set "disabled" in all of the first to third delivery function tables. This can prevent child lock from obstructing a loading operation and an unloading operation.

The manager can use the manager terminal to set a control mode in ADK 200. Specifically, the manager terminal is configured to be capable of executing application software for setting in ADK 200 one control mode selected from a plurality of types of control modes in which ADK 200 can operate. Hereinafter, such application software will be referred to as a "mode setting application". The mode setting application may previously be installed in the manager terminal or may be executed in the cloud. When the mode setting application is started in the manager terminal, the manager terminal executes a process flow F1 described below.

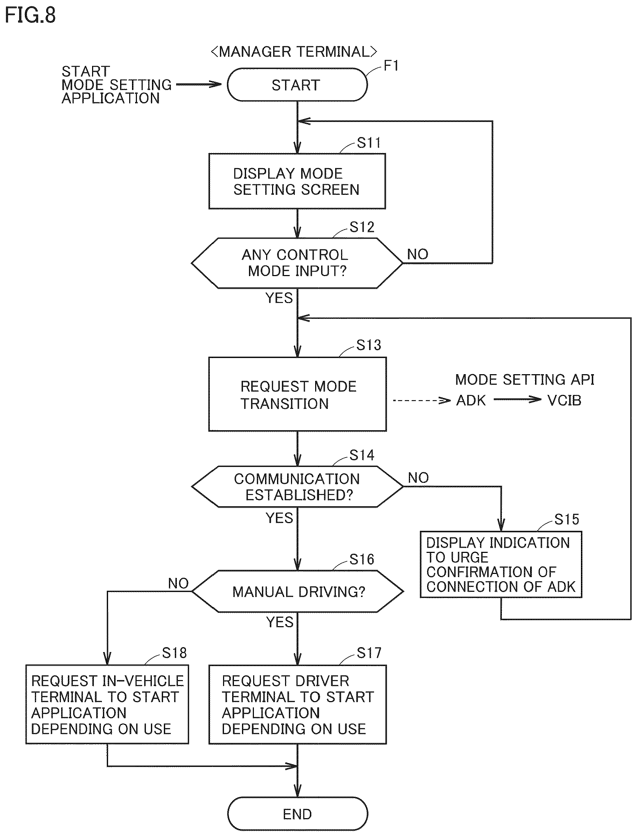

Fig. 8 is a flowchart of a process for setting a control mode executed by the manager terminal. Referring to Fig. 8, in the process flow F1, the manager terminal displays a mode setting screen in S11. Subsequently, in S12, the manager terminal determines whether one control mode is input to the displayed mode setting screen. While there is no control mode input (NO in S12), S11 and S12 are repeated, and the manager terminal continues to display the mode setting screen in S11.

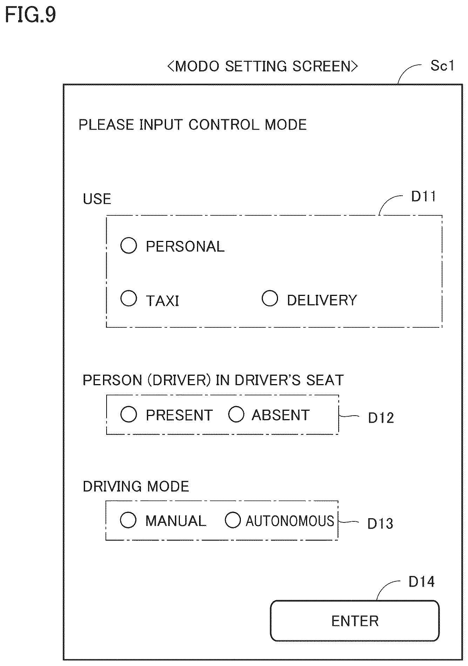

Fig. 9 shows an example of the mode setting screen. Referring to Fig. 9, a screen Sc1 corresponds to the mode setting screen. Screen Sc1 includes operation sections D11 to D13 for inputting information for a control mode, and an enter button D14. Operation sections D11 to D13 may each be a check box or a radio button, for example.

Operation section D11 receives an input of a use (personal mode/taxi mode/delivery mode) for vehicle 1 for a control mode. Operation section D12 receives an input of whether there is a person in the driver's seat for the control mode. It should be noted, however, that when operation section D11 is operated to select the personal mode, the control autonomously selects that there is a person in the driver's seat. Operation section D13 receives an input of a driving mode (manual driving mode/autonomous driving mode) for the control mode. It should be noted, however, that when operation section D12 is operated to select that there is no person in the driver's seat, the control autonomously selects the autonomous driving mode.

Screen Sc1 is displayed on a touch panel display of the manager terminal, for example. The manager can operate operation sections D11 to D13 to select one control mode from the above-described first to third manual driving modes and first to fifth autonomous driving modes. When the manager selects one control mode and operates enter button D14, A decision of YES is made in S12 of Fig. 8, and the control proceeds to S13.

Referring again to Fig. 8, in S13, the manager terminal requests ADK 200 to transition to the control mode selected as described above. ADK 200 uses the mode setting API to request VCIB 110 to set a control mode of base vehicle 120 to the control mode selected through S11 and S12 as described above. When the request to VCIB 110 is successful, ADK 200 returns a request complete signal to the manager terminal.

Subsequently, in S14, the manager terminal determines whether communication between ADK 200 and VCIB 110 is established based on whether the request complete signal is received. If ADK 200 and VCIB 110 are appropriately interconnected, the communication therebetween is established. In that case, VCIB 110 receives the mode setting API from ADK 200. Then, a decision of YES is made in S14, and the control proceeds to S16. In contrast, when there is no communication established between ADK 200 and VCIB 110 (NO in S14), the manager terminal displays a message in S15 to urge the manager to confirm connection of ADK 200. Thereafter, the control returns to S13. While no communication is established, S13 to S15 are repeated.

As described above, ADK 200 is configured to select one control mode from a plurality of types of control modes in response to a request received from the manager terminal (a terminal of a manager of vehicle 1). Furthermore, when ADK 200 is mounted on base vehicle 120 via VCIB 110 and one control mode is selected from a plurality of types of control modes, ADK 200 transmits to VCIB 110 a mode setting API (a mode signal) indicating the selected one control mode. This configuration allows the manager of vehicle 1 to change a control mode through the manager terminal. Then, the mode setting API is used to notify VCIB 110 of the changed control mode.

In S16, the manager terminal determines whether the control mode selected through S11 and S12 as described above is the manual driving mode. When the selected control mode is the manual driving mode (YES in S16), the manager terminal in S17 requests the driver terminal to start application software for manual driving (hereinafter referred to as "manual driving application") depending on the use. The manual driving application may previously be installed in the driver terminal or may be executed in the cloud. While the selected control mode is executed, the driver can use the manual driving application. A specific example of the manual driving application will be described hereinafter (see Fig. 11).

When the selected control mode is the autonomous driving mode (NO in S16), the manager terminal in S18 requests an in-vehicle terminal to start application software for autonomous driving (hereinafter referred to as "autonomous driving application") depending on the use. In the present embodiment, integrated control manager 130 and HMI 150 cooperate to function as the in-vehicle terminal. The autonomous driving application may previously be installed in the in-vehicle terminal or may be executed in the cloud. While the selected control mode is executed, the autonomous driving application is executed in vehicle 1.

When the steps of S17 or S18 is performed, the process flow F1 ends. The driver terminal starts the manual driving application in response to a request received from the manager terminal (S17). When the manual driving application is started in the driver terminal, the driver terminal executes a process flow F2 described below.

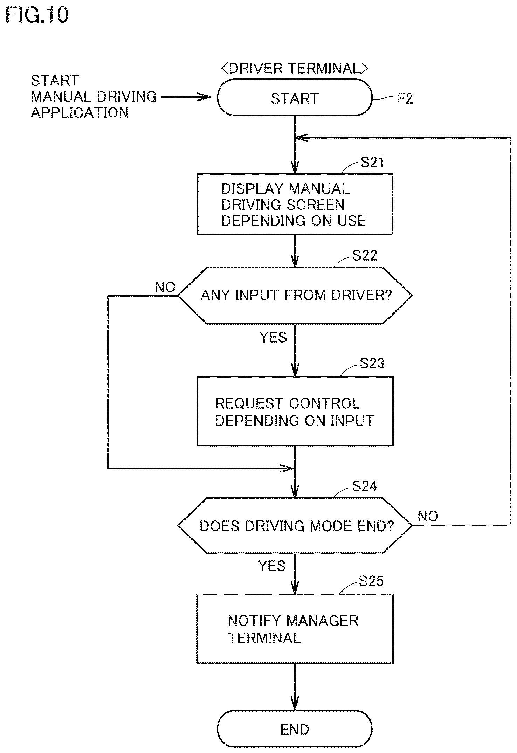

Fig. 10 is a flowchart of a process for the manual driving mode executed by the driver terminal. Referring to Fig. 10, in the process flow F2, the driver terminal displays a manual driving screen in S21 depending on the use. Subsequently, in S22, the driver terminal determines whether the driver has performed an input to the manual driving screen. When there is an input from the driver (YES in S22), the driver terminal in S23 requests the control system of base vehicle 120 to apply control depending on the input received from the driver. Thus, the control system of base vehicle 120 applies control in response to the input received from the driver. Thereafter, the control proceeds to S24. In contrast, when there is no input from the driver (NO in S22), the control skips S23 and proceeds to S24. In S24, the driver terminal determines whether a driving mode of vehicle 1 ends. For example, when a trip of vehicle 1 ends, the driver terminal determines that the driving mode of vehicle 1 ends. Specifically, when the driver switches a start switch of base vehicle 120 from an on state to an off state, the driver terminal may determine that the driving mode of vehicle 1 has ended. Generally, the start switch is referred to as a "power switch", an "ignition switch", or the like. Furthermore, the driver terminal also determines that a driving mode of vehicle 1 ends when a control mode of base vehicle 120 is changed.

When the driving mode of vehicle 1 is continued (NO in S24), the control returns to S21. In contrast, when the driving mode of vehicle 1 ends (YES in S24), the driver terminal in S25 notifies the manager terminal that the driving mode of vehicle 1 (e.g., any one of the first to third manual driving modes) ends. When the step of S25 is performed, the process flow F2 ends.

Fig. 11 shows an example of a manual driving screen depending on the use (personal use/passenger transportation/logistics). In S21 of Fig. 10, for example, any of screens Sc21 to Sc23 shown in Fig. 11 is displayed on a touch panel display of the driver terminal.

Referring to Fig. 11, screen Sc21 is a manual driving screen corresponding to the personal mode and includes images D21 and D31 and operation sections D20, D22, D30 and D32.

Image D21 shows an external appearance of vehicle 1. When the driver swipes image D21, the driver can rotate image D21 (i.e., change the displayed vehicle in orientation). When the driver touches a portion of image D21, the driver terminal displays information for that portion. For example, when the driver touches a portion corresponding to power storage device 190, the driver terminal displays information for power storage device 190 (such as specification information, a degree of deterioration, a remaining amount of power stored, etc.). Note that the remaining amount of power stored in power storage device 190 is also displayed on a meter panel. When the driver operates operation section D22, the driver terminal displays information (e.g., specification information) for equipment of vehicle 1. When the driver operates operation section D30, the driver terminal displays a screen for operating air conditioner 180. The driver can use the displayed operation screen to manually operate air conditioner 180.

Operation section D20 receives a request to change a driving mode. Operation section D20 is for example a toggle switch, and receives an operation of switching the first manual driving mode to the first autonomous driving mode and vice versa. For example, when the driver uses operation section D20 to select the first autonomous driving mode, the driver terminal requests the control system of base vehicle 120 to transition to the first autonomous driving mode.

Image D31 shows a map in a vicinity of vehicle 1 and the current location of vehicle 1. When the driver operates operation section D32, the driver terminal displays a screen for operating a navigation system. The driver can use the displayed operation screen to utilize a variety of types of functions of the navigation system.

Screen Sc22 is a manual driving screen corresponding to the taxi mode, and includes operation sections D41 to D44 in addition to image D31 and operation sections D30 and D32 described above. In the second manual driving mode, when a passenger enters the vehicle, the driver operates operation section D41. This causes the driver terminal to request the control system of base vehicle 120 to unlock door 174, and luggage compartment door 170 and doors 172 to 174 are unlocked in an interlocked manner (S23 of Fig. 10). When the passenger completes entering the vehicle, the driver operates operation section D42. This causes the driver terminal to request the control system of base vehicle 120 to lock all of the doors, and the vehicle thus has all of the doors locked (S23 of Fig. 10). The driver drives vehicle 1, and when the vehicle arrives at a destination, the driver operates operation section D43. This causes the driver terminal to solicit the passenger for a taxi fee. The passenger may use the driver terminal to make an electronic payment of the taxi fee. When the payment of the taxi fee is completed, the driver operates operation section D44. This causes the driver terminal to request the control system of base vehicle 120 to unlock door 174, and luggage compartment door 170 and doors 172 to 174 are unlocked in an interlocked manner (S23 of Fig. 10).

Screen Sc23 is a manual driving screen corresponding to the delivery mode, and includes operation sections D51 to D53 in addition to image D31 and operation section D32 described above. In the third manual operation mode, the function allowing manual operation of air conditioning is set "disabled" (see Fig. 7). Accordingly, screen Sc23 does not display operation section D30. In the third manual driving mode, when the vehicle is loaded, the driver operates operation section D51. This causes the driver terminal to request the control system of base vehicle 120 to unlock door 174, and the vehicle has all of the doors unlocked in an interlocked manner (S23 of Fig. 10). When loading the vehicle with luggage is completed, the driver operates operation section D52. This causes the driver terminal to request the control system of base vehicle 120 to lock all of the doors, and the vehicle has all of the doors locked (S23 of Fig. 10). The driver drives vehicle 1, and when the vehicle arrives at a destination, the driver operates operation section D53. This causes the driver terminal to request the control system of base vehicle 120 to unlock door 174, and the vehicle has all of the doors again unlocked in an interlocked manner (S23 of Fig. 10).

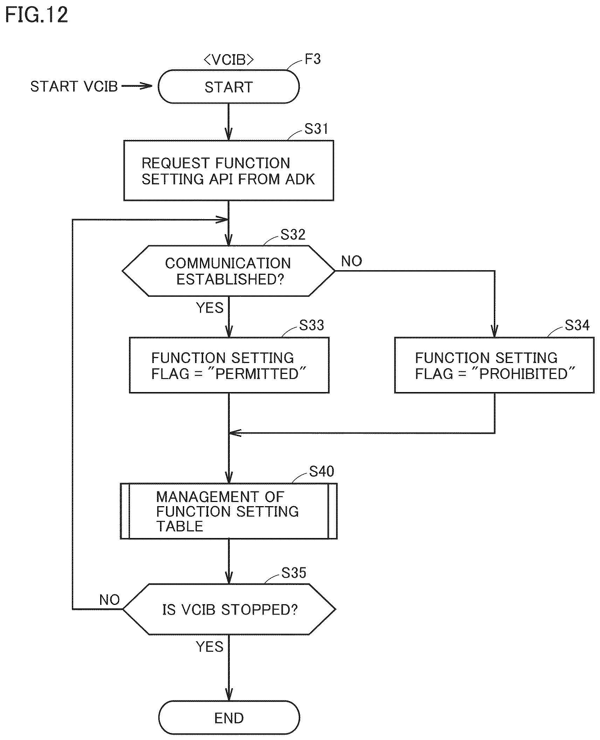

Fig. 12 is a flowchart of a process for function setting executed by VCIB 110. When VCIB 110 is started, the VCIB starts a process flow F3 shown in Fig. 12. VCIB 110 may be started/stopped in response to base vehicle 120 having the start switch turned on/off. VCIB 110 holds a function setting flag. The function setting flag indicates whether to permit storing (adding or changing) a function setting table in VCIB 110.

Referring to Fig. 12, VCIB 110 requests the function setting API from ADK 200 in S31. In response to the request, ADK 200 transmits the function setting API to VCIB 110. Subsequently, in S32, VCIB 110 determines whether communication is established between ADK 200 and VCIB 110. If communication is established, VCIB 110 receives the function setting API from ADK 200. When VCIB 110 receives the function setting API, a decision of YES is made in S32, and VCIB 110 subsequently in S33 sets "permitted" for the function setting flag. In contrast, when VCIB 110 does not receive the function setting API within a prescribed period of time, a decision of NO is made in S32, and VCIB 110 subsequently in S34 sets "prohibited" for the function setting flag. Thus, storing a function setting table in VCIB 110 is prohibited while no communication is established between ADK 200 and VCIB 110. This prevents a function setting table held by VCIB 110 from being rewritten through unauthorized communication (an access from other than ADK 200).

When the function setting flag is set in the step of S33 or S34, the control proceeds to S40. In S40, VCIB 110 executes a process flow F4 (a process for management of a function setting table) shown in Fig. 13. Fig. 13 is a flowchart more specifically describing S40.

Referring to Fig. 13, in S41, VCIB 110 determines whether the function setting flag indicates "permitted". Furthermore, in S42, whether VCIB 110 has received the function setting API is determined. When the function setting flag indicates "permitted" and VCIB 110 receives the function setting API (YES in both S41 and S42), VCIB 110 in S43 stores ADK setting information included in the received function setting API. The ADK setting information includes a function setting table for each control mode. VCIB 110 may include a storage device (see Fig. 4) accessible by both VCI control units 110A and 110B. The ADK setting information may be stored in the storage device. Alternatively, VCIB 110 may store the ADK setting information in a storage device of at least one of VCI control units 110A and 110B. VCIB 110 distinguishes for each mode each function setting table included in the ADK setting information, and thus manages the function setting table.

Once the step of S43 is performed, the control proceeds to S35 of Fig. 12. When a decision of NO is made in S41 or S42, the control skips S43 of Fig. 13 and proceeds to S35 of Fig. 12.

Referring again to Fig. 12, in S35, VCIB 110 determines whether a request is received to stop the VCIB. The request to stop the VCIB is issued for example by turning off the start switch of base vehicle 120. When VCIB 110 continues in operation (NO in S35), the control returns to S32. In contrast, when VCIB 110 receives the request to stop the VCIB (including a sleep request), the process flow F3 ends.

In the present embodiment, when ADK 200 is attached to VP 100 and VCIB 110 is in operation, the step of S100 of Fig. 4 is performed to allow VCIB 110 to receive the function setting API from ADK 200, and S43 of Fig. 13 is performed to store a function setting table for each control mode in a storage device of VCIB 110. Furthermore, when VCIB 110 is started, the VCIB is configured to request ADK setting information (the function setting table for each control mode) from ADK 200. When ADK 200 is attached to VP 100 and VCIB 110 is not in operation, and VCIB 110 is subsequently started, the step of S31 of Fig. 12 is performed and VCIB 110 receives the function setting API from ADK 200 and S43 of Fig. 13 is performed to store the function setting table for each control mode in the storage device of VCIB 110. This configuration allows the latest function setting information (or function setting table) for each control mode of ADK 200 to be stored in VCIB 110 whenever VCIB 110 is started.

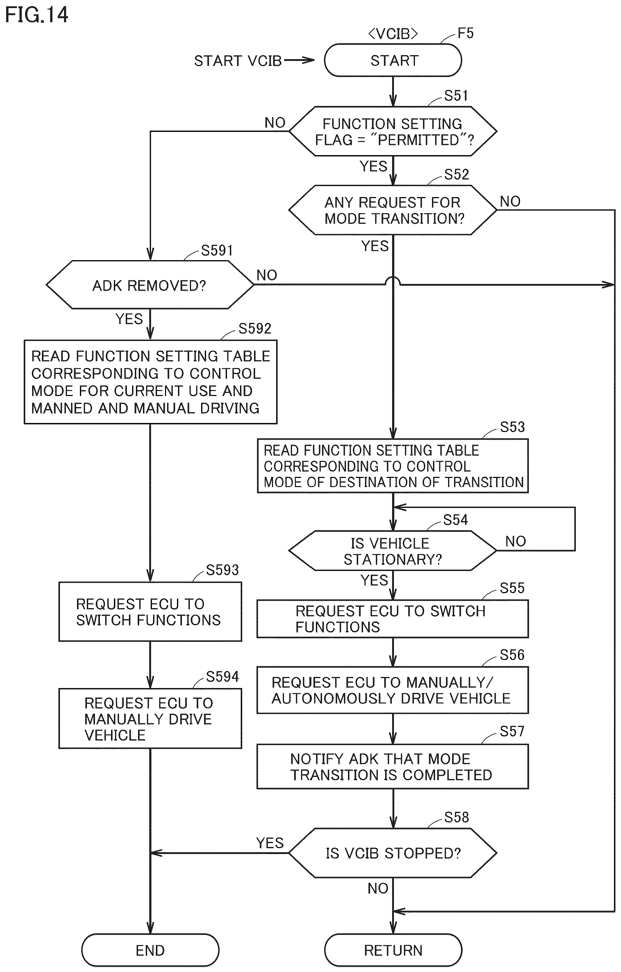

When VCIB 110 is started, a process flow F5 shown in Fig. 14 is also started in parallel with the process flow F3 shown in Fig. 12. Fig. 14 is a flowchart of a process for control mode transition executed by VCIB 110.

Referring to Fig. 14, in the process flow F5, VCIB 110 in S51 determines whether the function setting flag indicates "permitted". When the function setting flag indicates "permitted" (YES in S51), VCIB 110 in S52 determines whether a request for mode transition is received. For example, a decision of YES is made in S52 when VCIB 110 receives from ADK 200 a mode setting API indicating a control mode different from the current control mode (a control mode in operation). Furthermore, a decision of YES is also made in S52 when the driver changes a driving mode through operation section D20 (Fig. 11).

When VCIB 110 does not receive the request for mode transition (NO in S52), the step of S53 et. seq. are not performed, and the control returns to the initial step (S51). In contrast, when a decision of YES is made in S52, VCIB 110 in S53 reads a function setting table (see Figs. 5 to 7) corresponding to a control mode of the destination of the transition. The control mode of the destination of the transition is a control mode requested through the mode setting API, or the first manual driving mode or the first autonomous driving mode requested on screen Sc1 (Fig. 11).
Subsequently, in S54, VCIB 110 determines whether vehicle 1 is stationary. When vehicle 1 is traveling (NO in S54), S54 is repeated until vehicle 1 is stationary.

When vehicle 1 is stationary (YES in S54), VCIB 110 in S55 refers to the function setting table corresponding to the control mode of the destination of the transition (i.e., the selected one control mode) to request each ECU in the control system of base vehicle 120 to enable or disable each of the plurality of functions in base vehicle 120 (see Figs. 5 to 7). Each ECU may hold a flag for each function (for example for each item shown in Figs. 5 to 7). For example, when the function setting table corresponding to the control mode of the destination of the transition indicates a function with a set value of "disabled (constantly held off)", "enabled (constantly held on)", or "enabled (manually switchable on/off)", a value of "0", "1", or "2", respectively, may be set for a flag for the corresponding function. Each ECU may follow such a value of the flag to control the corresponding function.

Subsequently, VCIB 110 in S56 requests the control system of base vehicle 120 to apply autonomous driving control or manual driving control corresponding to the control mode of the destination of the transition. For example, when the control mode of the destination of the transition is any of the first to third manual driving modes, VCIB 110 requests manual driving control. When the control mode of the destination of the transition is any of the first to fifth autonomous driving modes, VCIB 110 requests autonomous driving control. Transitioning to the control mode in base vehicle 120 is thus completed. Thereafter, in S57, VCIB 110 notifies ADK 200 that transitioning to the control mode in base vehicle 120 is completed (i.e., notification of completion of mode transition). In the notification of completion of mode transition, VCIB 110 for example transmits to ADK 200 a control mode status indicating the changed control mode (i.e., the control mode of the destination of the transition).

As described above, in the present embodiment, a control mode is changed while vehicle 1 is stationary. When VCIB 110 is requested from ADK 200 to change a control mode while vehicle 1 is traveling, the VCIB changes the control mode after vehicle 1 stops traveling. This suppresses an unstable behavior of vehicle 1 caused by changing the control mode (or causing a transition thereof).

After S57 (notification of completion of mode transition), VCIB 110 in S58 determines whether a request is received to stop the VCIB. When VCIB 110 continues to be in operation (NO in S58), the control returns to the initial step (S51). In contrast, when VCIB 110 receives the stop request (including a sleep request), the process flow F5 ends.

When the function setting flag indicates "prohibited" (NO in S51), VCIB 110 in S591 determines whether ADK 200 is removed from VP 100. Before ADK 200 is attached to VP 100, the function setting flag indicates "prohibited", although VP 100 is not removed. In that case, a decision of NO is made in S591, and the control returns to the initial step (S51). In contrast, when it is determined that ADK 200 is removed from VP 100 (YES in S591), VCIB 110 in S592 sets for the control mode of the destination of the transition a manual driving mode in which a person in the driver's seat of vehicle 1 manually drives vehicle 1 without changing the use of vehicle 1, and the VCIB reads a function setting table corresponding to the control mode of the destination of the transition. For example, when the current control mode is the second autonomous driving mode or the third autonomous driving mode, the second manual driving mode is set as the control mode of the destination of the transition. When the current control mode is the fourth autonomous driving mode or the fifth autonomous driving mode, the third manual driving mode is set as the control mode of the destination of the transition. When ADK 200 is removed from VP 100, vehicle 1 is considered to be stationary.

Subsequently, in S593, VCIB 110 refers to the function setting table corresponding to the control mode of the destination of the transition set in S592 to request each ECU in the control system of base vehicle 120 to enable or disable each of the plurality of functions in base vehicle 120 (see Figs. 5 to 7). Subsequently, VCIB 110 in S594 requests the control system of base vehicle 120 to apply manual driving control. Thereafter, the process flow F5 ends.

The steps of S591 to S594 facilitate also subjecting the vehicle with ADK 200 removed therefrom (i.e., VP 100) to appropriate vehicle control depending on the use. Furthermore, the above configuration can prevent the vehicle with ADK 200 removed therefrom from being used for a use which is not permitted by the manager. This can suppress theft of the vehicle.

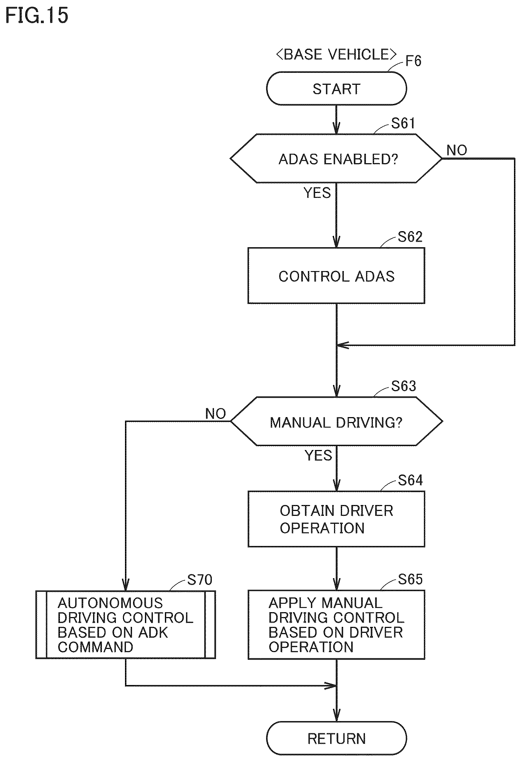

Fig. 15 is a flowchart of a process for driving control applied by base vehicle 120. Fig. 15 shows a process flow F6, which is repeatedly executed by any of a plurality of controllers that base vehicle 120 comprises (e.g., integrated control manager 130 and each system's controller shown in Figs. 1 and 2).

Referring to Fig. 15, in the process flow F6, base vehicle 120 in S61 determines whether ADAS 125 has at least one function thereof enabled. ADAS 125 has each function switched according to a control mode (S55 or S593 in Fig. 14). When ADAS 125 has at least one function thereof enabled (YES in S61), base vehicle 120 in S62 applies control for the enabled function of ADAS 125. Thereafter, the control proceeds to S63. In contrast, when ADAS 125 has its functions all disabled (NO in S61), the control skips S62 and proceeds to S63.

In S63, base vehicle 120 determines whether to apply driving control in the manual driving mode. A driving mode (or driving control) is changed for example depending on the request received from VCIB 110 (see S56 or S594 in Fig. 14). When base vehicle 120 applies driving control in the manual driving mode (YES in S63), base vehicle 120 in S64 obtains a driver operation for driving vehicle 1. Specifically, base vehicle 120 obtains an amount of operating a variety of types of operation units (amounts of operating an accelerator pedal, braking, steering, etc.) and a changing operation (a shift changing operation or the like) for manually driving vehicle 1. Subsequently, base vehicle 120 applies manual driving control in S65 based on the obtained driver operation. In contrast, when base vehicle 120 applies driving control in the autonomous driving mode (NO in S63), base vehicle 120 applies autonomous driving control in S70 based on a driving command received from ADK 200. When the step of S65 or S70 is performed, the control returns to the initial step (S61). Driving control (S65 or S70) is thus continuously applied.

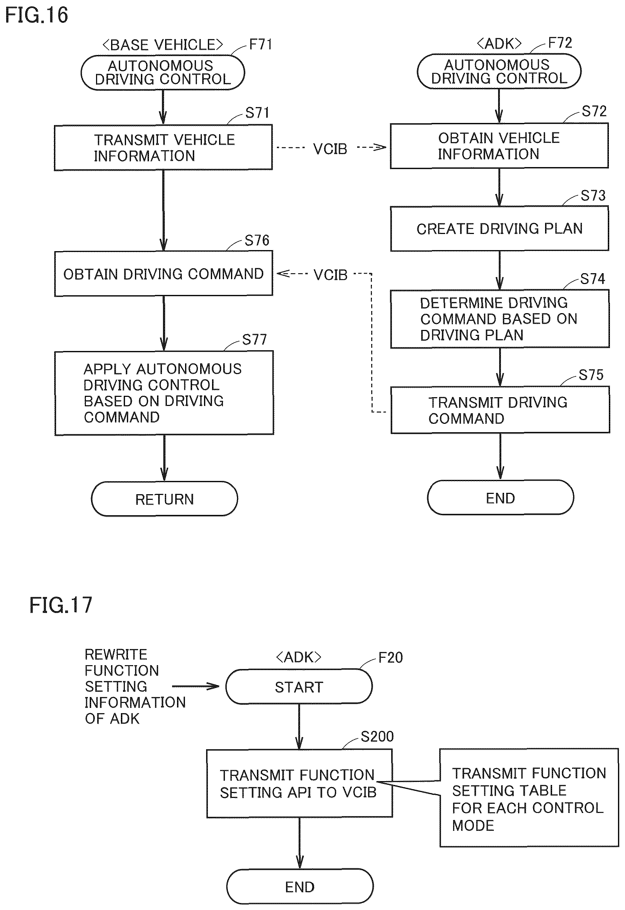

Fig. 16 is a flowchart showing details of autonomous driving control (S70 of Fig. 15). Base vehicle 120 executes a process flow F71 and ADK 200 executes a process flow F72. VCIB 110 converts signals between ADK 200 and base vehicle 120 to establish communications therebetween.

Referring to Fig. 16, in the process flow F71, at S71, base vehicle 120 transmits to VCIB 110 a result of detection by a variety of types of sensors indicating a state of base vehicle 120 and a result of determining the state. VCIB 110 transmits to ADK 200 a variety of types of API statuses corresponding to the state of base vehicle 120. ADK 200 thus starts the process flow F72.

ADK 200 receives the variety of types of API statuses from VCIB 110 in S72. Subsequently, ADK 200 in S73 creates a driving plan for autonomous driving, based on the variety of types of API statuses obtained from VCIB 110 and environmental information and pose information that ADK 200 per se obtains. The driving plan is data indicating a behavior of vehicle 1 targeted for a predetermined period of time. ADK 200 may calculate a behavior (a pose, etc.) of vehicle 1 and create a driving plan suitable for a control mode of vehicle 1 and an external environment. Subsequently, in S74, ADK 200 determines a variety of types of API commands (a propulsion direction command, an acceleration command, a front wheel steering angle command, and an immobilization command, etc.) for applying control requested by the created driving plan. The control requested by the driving plan may for example be at least one of: acceleration control; deceleration control; steering control; and parking control. ADK 200 may calculate a physical quantity requested by the driving plan for control (such as acceleration, a tire turning angle, etc.), and determine the variety of types of API commands based on the calculation result. Subsequently, in S75, ADK 200 transmits the determined variety of types of API commands to VCIB 110. VCIB 110 transmits to base vehicle 120 a variety of types of driving commands (an internal command) corresponding to the variety of types of API commands. The process flow F72 thus ends and the control moves to the process flow F71. A driving command corresponds to an autonomous driving command issued from ADK 200 to the control system of base vehicle 120.

In the process flow F71, base vehicle 120 in S76 receives the variety of types of driving commands from VCIB 110, and subsequently in S77 applies autonomous driving control based on the driving commands. In S70 of Fig. 15, autonomous driving control is applied for example as described above.

As has been described above, in the present embodiment, VP 100 corresponds to an example of a "vehicle on which an autonomous driving kit is mountable" according to the present disclosure. VP 100 includes VCIB 110 and base vehicle 120. A control system incorporated in base vehicle 120 corresponds to an example of a "control system" according to the present disclosure. VP 100 executes the process flows F3 to F6 and F71 (Figs. 12 to 16). ADK 200 attached to VP 100 executes the process flows F10 and F72 (Figs. 4 and 16). In the present embodiment, each process is performed by one or more processors executing a program stored in one or more memories. Note, however, that these processes may be performed without using software and instead by hardware (e.g., electronic circuitry) alone.

VCIB 110 is configured to receive from ADK 200 and store function setting information for each of a plurality of types of control modes. The function setting information (e.g., a function setting table) is information indicating whether each of a plurality of functions of the vehicle is enabled or disabled. VCIB 110 is configured to refer to function setting information corresponding to one selected control mode to request a control system (base vehicle 120) to enable or disable each of the plurality of functions. This allows the vehicle to have the plurality of functions each switched to be enabled/disabled depending on the one control mode selected from the plurality of types of control modes. This suppresses signal communication between ADK 200 and VCIB 110. This allows appropriate vehicle control to be applied in each of a plurality of types of control modes while reducing a burden imposed on ADK 200.

In the above embodiment, ADK setting information (function setting information for each of a plurality of types of control modes) is stored in VCIB 110 when ADK 200 is attached (see Fig. 4) or when VCIB 110 is started (see Figs. 12 and 13). It should be noted, however, that after the ADK setting information is stored, the manager terminal may rewrite a program and function setting information in ADK 200. The manager terminal may rewrite the program and function setting information in ADK 200 by over the air (OTA). When the function setting information (the ADK setting information) is rewritten, ADK 200 may execute a process flow F20 indicated in Fig. 17.

Fig. 17 is a flowchart of a process performed by ADK 200 when the ADK setting information is rewritten. Referring to Fig. 17, in the process flow F20, ADK 200 in S200 transmits to VCIB 110 a function setting API including updated ADK setting information. When VCIB 110 is in operation, VCIB 110 can receive the function setting API transmitted from ADK 200. Based on the received function setting API, VCIB 110 rewrites a stored function setting table for each control mode. When the step of S200 is performed, the process flow F20 ends. When the ADK setting information is rewritten and VCIB 110 is not in operation, and thereafter VCIB 110 is started, the step of S31 of Fig. 12 is performed and VCIB 110 receives the function setting API from ADK 200, and in S43 of Fig. 13 the function setting table stored in VCIB 110 for each control mode is rewritten.

According to the process flow F20, when VCIB 110 stores ADK setting information received from ADK 200 and thereafter ADK 200 has function setting information (the ADK setting information) rewritten, VCIB 110 again receives the updated ADK setting information (or function setting information for each control mode) from ADK 200. Then, VCIB 110 rewrites the stored function setting information for each control mode based on the received ADK setting information. The latest function setting information in ADK 200 is thus stored in VCIB 110.

The number and types of uses of vehicle 1 are not limited to the three uses shown in Figs. 5 to 7, and can be changed as appropriate. For example, in place of or in addition to at least one of personal use, passenger transportation, and logistics, other uses (vehicles for sale, medical vehicles, mobile offices, etc.) may be adopted. Furthermore, vehicle 1 may be a taxi-dedicated vehicle, and only the first to third taxi function tables (Fig. 6) may be used. Furthermore, the items (or functions) defined in the function setting table for each control mode can also be changed as appropriate. For example, a ventilation function, a massage function, a reclining function, an in-vehicle refrigerator system, and the like may be added to the items indicated in Figs. 5 to 7.

According to the above embodiment, vehicle 1 in either the autonomous driving mode or the manual driving mode has an operation unit (such as a steering wheel) for manual driving maintained in a usable state. However, the operation unit for manual driving may be disabled (e.g., stored to be inoperable) when the manual driving mode is switched to the autonomous driving mode. Such a type of vehicle has no risk of being driven by a passenger even if the passenger enters the vehicle and sits in a front seat. Therefore, locking/unlocking doors 171 to 174 may be interlocked in the second taxi function table (unmanned/autonomous) shown in Fig. 6.

While Fig. 3 shows a right-hand drive, a variety of types of features for a vehicle as described above may be applied to a left-hand drive. The vehicle is not limited to a passenger car, and may be a bus, a truck, or a multipurpose vehicle configured to be able to customize the vehicle's equipment depending on the purpose of use.

The variety of types of features for the vehicle as described above (each feature described in embodiments and variations) may be combined together, as appropriate, and applied.

Although embodiments of the present disclosure have been described, it should be understood that the embodiments disclosed herein are by way of illustration and example only and not to be taken by way of limitation in any respect. The scope of the present disclosure is defined by the terms of the appended claims and intended to encompass any modification that falls within the meaning and scope equivalent to the terms of the claims.

## Claims

1. A vehicle (100) on which an autonomous driving kit (200) is mountable, comprising:
a control system (120) configured to control a plurality of functions of the vehicle; and
a vehicle control interface box (110) configured to mediate communication of a signal between the autonomous driving kit and the control system,
the autonomous driving kit being configured to operate in one control mode selected from a plurality of types of control modes,
the vehicle control interface box being configured to receive from the autonomous driving kit and store function setting information for each of the plurality of types of control modes,
the function setting information being information indicating whether each of the plurality of functions is enabled or disabled, and
the vehicle control interface box being configured to request the control system to enable or disable each of the plurality of functions based on the function setting information corresponding to the selected one control mode.

2. The vehicle according to claim 1, wherein
the autonomous driving kit (200) is configured to select one control mode from the plurality of types of control modes in response to a request received from a terminal (600, 500A, 218) of a manager of the vehicle, and
when the autonomous driving kit is mounted on the vehicle (100) and one control mode is selected from the plurality of types of control modes, the autonomous driving kit transmits a mode signal indicating the selected one control mode to the vehicle control interface box (110).

3. The vehicle according to claim 2, wherein
the plurality of types of control modes include at least one type of autonomous driving mode and at least one type of manual driving mode, and
when the vehicle (100) is stationary and the vehicle control interface box (110) receives the mode signal from the autonomous driving kit (200), the mode signal indicating a control mode different from a current control mode, the vehicle control interface box (110) is configured to
request the control system (120) to enable or disable each of the plurality of functions based on the function setting information corresponding to the control mode indicated by the mode signal, and
request the control system to apply autonomous driving control or manual driving control corresponding to the control mode indicated by the mode signal.

4. The vehicle according to claim 3, wherein
when the vehicle (100) is traveling and the vehicle control interface box (110) receives the mode signal from the autonomous driving kit (200), the mode signal indicating a control mode different from a current control mode, and thereafter the vehicle is stationary, the vehicle control interface box (110) is configured to
request the control system (120) to enable or disable each of the plurality of functions based on the function setting information corresponding to the control mode indicated by the mode signal, and
request the control system to apply autonomous driving control or manual driving control corresponding to the control mode indicated by the mode signal.

5. The vehicle according to claim 1, wherein
when the vehicle control interface box (110) is started, the vehicle control interface box (110) is configured to request the function setting information for each of the plurality of types of control modes from the autonomous driving kit (200).

6. The vehicle according to claim 1, wherein
when the vehicle control interface box (110) stores the function setting information for each of the plurality of types of control modes and thereafter the function setting information in the autonomous driving kit (200) is rewritten, the vehicle control interface box is configured to
again receive the function setting information for each of the plurality of types of control modes from the autonomous driving kit, and
rewrite the stored function setting information for each control mode based on the received function setting information for each control mode.

7. The vehicle according to any one of claims 1 to 6, further comprising a driver's seat (161), a front passenger seat (162), a rear seat (163, 164), a first door (171) provided for the driver's seat, a second door (172) provided for the front passenger seat, and a third door (173, 174) provided for the rear seat, wherein
the plurality of functions include
a first function of interlocking locking/unlocking the first door and locking/unlocking the second door,
a second function of interlocking locking/unlocking the first door and locking/unlocking the third door, and
a third function of interlocking locking/unlocking the second door and locking/unlocking the third door.

8. The vehicle according to claim 7, further comprising a luggage compartment (160) and a luggage compartment door (170) provided for the luggage compartment, wherein
the plurality of functions further include
a fourth function of interlocking locking/unlocking the first door (171) and locking/unlocking the luggage compartment door,
a fifth function of interlocking locking/unlocking the second door (172) and locking/unlocking the luggage compartment door, and
a sixth function of interlocking locking/unlocking the third door (173, 174) and locking/unlocking the luggage compartment door.

9. The vehicle according to any one of claims 1 to 6, wherein
the plurality of types of control modes are distinguished based on whether the vehicle is driven autonomously or manually, whether a person is present in the driver's seat (161) of the vehicle, and how the vehicle (100) is used.

10. The vehicle according to claim 9, wherein
when the autonomous driving kit (200) is removed from the vehicle (100), the vehicle control interface box (110) is configured to
request the control system (120) to enable or disable each of the plurality of functions based on the function setting information corresponding to a manual driving mode without changing how the vehicle is used, the manual driving mode allowing a person in the driver's seat (161) of the vehicle to manually drive the vehicle, and
request the control system to apply manual driving control.

11. The vehicle according to any one of claims 1 to 6, wherein
the plurality of types of control modes include:
a first manual driving mode in which the vehicle (100) is used for personal use and the vehicle is manually driven by a person in a driver's seat (161) of the vehicle;
a second manual driving mode in which the vehicle (100) is used for passenger transportation and the vehicle is manually driven by a person in the driver's seat (161) of the vehicle;
a first autonomous driving mode in which the vehicle (100) is used for personal use and the vehicle is controlled to be autonomously driven with a person present in the driver's seat (161) of the vehicle; and
a second autonomous driving mode in which the vehicle (100) is used for passenger transportation and the vehicle is controlled to be autonomously driven with a person absent in the driver's seat (161) of the vehicle.

12. The vehicle according to claim 11, further comprising a driver's seat (161), a front passenger seat (162), a rear seat (163, 164), a first door (171) provided for the driver's seat, a second door (172) provided for the front passenger seat, and a third door (173, 174) provided for the rear seat, wherein
the plurality of functions include
a first function of interlocking locking/unlocking the first door and locking/unlocking the second door,
a second function of interlocking locking/unlocking the first door and locking/unlocking the third door, and
a third function of interlocking locking/unlocking the second door and locking/unlocking the third door,
the function setting information corresponding to the second manual driving mode indicates that the third function is enabled and that the first function and the second function are each disabled, and
the function setting information corresponding to the second autonomous driving mode indicates that the first function is enabled and that the second function and the third function are each disabled.

13. The vehicle according to claim 12, further comprising a luggage compartment (160) and a luggage compartment door (170) provided for the luggage compartment, wherein
the plurality of functions further include
a fourth function of interlocking locking/unlocking the first door (171) and locking/unlocking the luggage compartment door,
a fifth function of interlocking locking/unlocking the second door (172) and locking/unlocking the luggage compartment door, and
a sixth function of interlocking locking/unlocking the third door (173, 174) and locking/unlocking the luggage compartment door,
the function setting information corresponding to the second manual driving mode further indicates that the fifth function and the sixth function are each enabled and the fourth function is disabled, and
the function setting information corresponding to the second autonomous driving mode further indicates that the fourth function, the fifth function, and the sixth function are each disabled.

14. The vehicle according to claim 11, further comprising a driver assistance system configured to (i) perform driving assistance to reduce a driving burden imposed on a driver, (ii) alert the driver, or (iii) respond when the driver is in emergency, wherein
the function setting information corresponding to the second manual driving mode indicates that the driver assistance system is enabled, and
the function setting information corresponding to the second autonomous driving mode indicates that the driver assistance system is disabled.

15. A vehicle control interface box (110) mountable to a vehicle (100),
the vehicle control interface box being configured to mediate communication of a signal between an autonomous driving kit (200) attached to the vehicle and a control system (120) incorporated in the vehicle,
the autonomous driving kit being configured to be operable in one control mode selected from a plurality of types of control modes,
the vehicle control interface box being configured to receive from the autonomous driving kit and store function setting information for each of the plurality of types of control modes,
the function setting information being information indicating whether each of a plurality of functions of the vehicle is enabled or disabled, and
the vehicle control interface box being configured to request the control system to enable or disable each of the plurality of functions based on the function setting information corresponding to the selected one control mode.
